# FASCICULE DE BREVET EUROPEEN

(11) **EP 2 002 682 B1**
(45) Date de publication et mention de la délivrance du brevet: **10.01.2018**
(21) Numéro de dépôt: 07726811.8
(22) Date de dépôt: 12.03.2007
(51) Int. Cl.: H04W 84/14, H04W 40/20

(54) **OPTIMISATION DES RESSOURCES DE TRANSMISSION PAR BOUCLAGE LOCAL DANS UN RÉSEAU CELLULAIRE DE RADIOCOMMUNICATION MOBILE**
OPTIMIERUNG VON ÜBERTRAGUNGSBETRIEBSMITTELN DURCH LOKALE PRÜFSCHLEIFEN IN EINEM ZELLULAREN MOBILFUNKKOMMUNIKATIONSNETZ
OPTIMIZING TRANSMISSION RESOURCES BY LOCAL LOOP IN A MOBILE RADIO COMMUNICATION CELLULAR NETWORK

(30) Priorité: 14.03.2006 FR 0602222; 14.03.2006 FR 0602223; 29.12.2006 FR 0611565
(43) Date de publication de la demande: 17.12.2008
(73) Titulaire: CELL & SAT, 75001 Paris (FR)
(72) Inventeur: DE JAEGER, Bogéna, F-75011 Paris (FR); MOULY, Michel, F-91120 Palaiseau (FR); VERHULST, Didier, F-78170 La Celle St Cloud (FR)
(74) Mandataire: Vidon Brevets & Stratégie
(86) Numéro de dépôt international: PCT/EP2007/052305
(87) Numéro de publication internationale: WO 2007/104743

(56) Documents cités:
- EP-A- 1 282 320
- EP-A- 1 387 592
- EP-A- 1 528 714
- FR-A1- 2 870 662
- US-A- 5 761 195

## Description

### 1. Domaine de l'invention

Le domaine de l'invention est celui des réseaux de communication. Plus précisément, l'invention concerne les réseaux cellulaires tels que notamment, mais non exclusivement, le GSM (« Global System for Mobile » en anglais) ou l'UMTS (« Universal Mobile Télécommunications Service » en anglais).

L'invention s'applique à tout réseau cellulaire dans lequel il est utile d'optimiser l'utilisation des ressources de transmission.

Il s'applique particulièrement, mais non exclusivement, à un réseau cellulaire comprenant par exemple une liaison radio par satellite permettant de relier un ensemble de stations, appelées stations de base (BTS dans le cas du réseau GSM), avec un équipement central appelé Hub, lui même relié aux contrôleurs de stations de base (BSC dans le cas du réseau GSM). Dans ce cas, la ressource satellite constitue naturellement une ressource chère à utiliser, et qu'il est intéressant d'optimiser et d'économiser le plus possible.

L'invention est ainsi particulièrement adaptée à la mise en oeuvre d'un réseau cellulaire dans des zones où le trafic des communications est relativement faible, comme les zones rurales par exemple, et où les techniques classiques requièrent des coûts d'investissement et surtout de fonctionnement relativement élevés au regard de ce trafic faible.

Mais elle s'applique plus généralement à toute situation où la gestion de ressources est critique.

### 2. Techniques de l'art antérieur

Tout d'abord, il est important de noter que, par souci de clarté, on présente les inconvénients de l'état de la technique dans le cas particulier du standard GSM. Cependant, la présente invention s'applique à tout type de réseau cellulaire, tels que par exemple ceux définis par le projet 3GPP (pour « Third Génération PartnerShip Project » en anglais). L'homme du métier pourra aisément mettre en oeuvre la présente invention dans un réseau de type UMTS ou autre.

La popularité grandissante du système GSM dans le monde entier a conduit les opérateurs à déployer ce service non seulement dans les régions métropolitaines, mais aussi de plus en plus dans des zones rurales et plus isolées ou éloignées. Dans ce dernier type de régions, une infrastructure terrestre est souvent insuffisante ou mal adaptée pour assurer une bonne couverture de réseau. Un système de liaison radio par satellite est alors un très bon moyen d'étendre le service GSM et ce type de système est aujourd'hui communément utilisé dans de nombreuses régions du monde.

Cependant, les ressources radio satellite restent coûteuses à ce jour, et toute la problématique de ce type d'application réside dans les techniques de réduction de la bande passante nécessaire à la transmission des données par voie radio satellite.

Une telle problématique reste notamment valable dans le cas où deux utilisateurs sont situés dans la même cellule géographique, ou tout le moins localisés dans des cellules proches l'une de l'autre. Dans un tel cas, on conçoit que les techniques classiques de transmission en réseau GSM, par essence centralisé, consomment des ressources trafic bien supérieures à ce que permettrait un acheminement optimisé.

Pour plus de clarté, on décrit ci-après les inconvénients de l'art antérieur dans le cas spécifique d'un système GSM mis en oeuvre par l'intermédiaire d'une liaison satellite, et dans lequel deux utilisateurs situés dans une même cellule ou dans deux cellules suffisamment voisines du réseau GSM, en aval de la liaison satellite, sont en communication.

### 2.1 Architecture du GSM

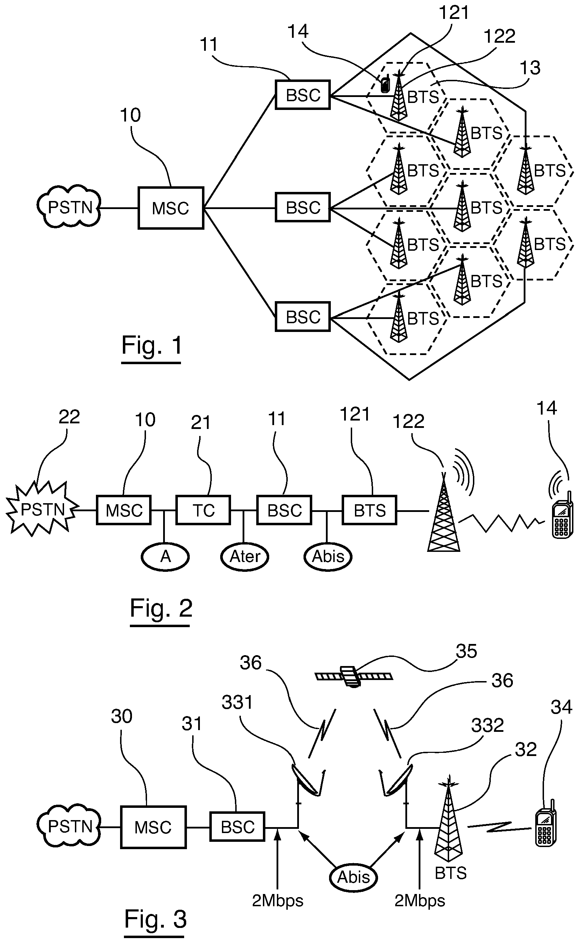

En relation avec la figure 1, l'architecture classique d'un réseau cellulaire de type GSM comprend un commutateur de service mobile 10, dit MSC (pour « Mobile Switching Center » en anglais), un contrôleur de station de base 11, dit BSC (pour « Base Station Controller » en anglais) et enfin une ou plusieurs stations de bases 12, dites BTS (pour « Base Transceiver Station » en anglais).

Chaque BTS assure la couverture radio GSM dans une ou plusieurs cellules. A titre d'exemple, en relation avec la figure 1, la BTS 121 est contrôlée par le BSC 11 et couvre la cellule géographique 13, dans laquelle se trouve un certain nombre d'utilisateurs disposant d'une Station Mobile (MS) de radiocommunication 14.

Plus précisément, le MSC contrôle la configuration des appels pour chaque appel entrant ou sortant, et il a un rôle d'interface avec les autres réseaux de télécommunications. Chaque communication passe par le MSC, qui contrôle plusieurs BSC.

Le BSC, quant à lui, est chargé d'allouer les canaux radio nécessaires pour chaque appel. Il gère les transferts intercellulaires entre deux BTS. Un seul BSC supporte plusieurs BTS qui assurent la couverture d'une large zone géographique.

Enfin, une BTS a pour rôle d'effectuer la transmission radio GSM avec les utilisateurs de Stations Mobiles. Les BTS sont localisées à proximité de pylônes 122 supportant des antennes, et réparties dans l'espace géographique de couverture du réseau cellulaire.

Le standard GSM et ses évolutions, tels que défini par le groupe 3GPP (pour « third Génération Partnership Project » en anglais), utilise la compression de voix. Cette compression est réalisée par un transcodeur aussi appelé TC. Selon la norme GSM , le TC peut être implémenté au site MSC, au site BSC ou encore au site BTS. Les considérations économiques conduisent à implémenter de préférence le TC au site MSC, de façon à réduire les coûts de transmission.

Plusieurs types de codecs ont été définis par le groupe 3GPP. Le codec GSM FR « plein débit » (« full rate » en anglais) opère à un débit de 13kbit/s. Les codecs HR « demi débit » (« half rate » en anglais) et EFR « plein débit étendu » (« enhanced full rate ») opèrent respectivement à 5,6 kbit/s et 12,2 kbit/s. Après transcodage, la parole à 64 kbit/s compressée à 13 / 12,2 kbit/s (respectivement 5.6 kbit/s) est véhiculée vers la station de base BTS sur un intervalle de temps à 16 kbit/s (respectivement 8 kbit/s). Selon la spécification 3GPP TS 08.60 (respectivement TS 08.61), la parole compressée est transmise à la BTS toutes les 20 ms selon le format de trame TRAU (pour « Transcoder and Adaptation Unit » en anglais).

Ces mêmes principes s'appliquent aux codages AMR (en anglais « Adaptative Multi Rate ») plein débit FR et débit réduit HR.

La trame TRAU transporte, en plus des informations de parole compressée, des informations de signalisation de type « bits de contrôle » permettant d'optimiser la qualité des communications entre l'entité de transcodage TC et l'unité de codage-décodage de canal CCU (pour « Channel Codec Unit » en anglais) à la BTS. Ces bits de contrôle permettent en particulier d'assurer la synchronisation des informations échangées, de définir le type de codage utilisé (FR, EFR, HR ou AMR) et aussi d'indiquer la discontinuité de la transmission liée aux silences de la parole (DTX).

De façon à introduire la mise en oeuvre d'une liaison satellite au sein d'un réseau cellulaire, on décrit maintenant succinctement, en relation avec la figure 2, les interfaces mises en oeuvre et leur dénomination entre les entités principales introduites précédemment.

On note PSTN (pour « Public Switched Telephone Network » en anglais) 22 le réseau téléphonique public commuté.

L'interface entre le MSC 10 et un BSC 11 est dite interface A.

L'interface entre un BSC 11 et la BTS 121 est nommée l'interface Abis.

Dans le cas où le TC 21 est implémenté au site MSC 10, l'interface entre le TC 21 et le BSC 11 est appelé Ater.

Une liaison satellite peut être utilisée au sein de la chaîne de transmission pour chacune de ces interfaces. La problématique principale de l'insertion d'une liaison satellite sur l'une de ces interfaces est alors de déterminer comment transmettre de façon efficace les informations nécessaires tout en minimisant la bande radio nécessaire de transmission par satellite.

L'interface A, utilisée entre un MSC et un BSC, est constituée par une ou plusieurs liaisons à 2 Mbit/s (Standard ITU G703/ G704). Chaque lien à 2Mbit/s supporte 30 canaux de voix non compressée - à 64 kbit/s - et un canal de signalisation SS7. Le nombre de liens à 2 Mbit/s dépend du dimensionnement du sous-système BSS. Le canal de signalisation contient des messages indiquant en particulier les besoins de trafic en fonction du nombre de communications.

L'interface Abis connecte un BSC avec une BTS et est constituée d'une ou plusieurs liaisons à 2 Mbit/s (Standard ITU G703/ G704). C'est une des interfaces qui est classiquement mise en oeuvre avec une transmission par satellite.

Cette interface Abis transporte des données de trafic, telle que la voix compressée et des informations de signalisation.

Sur l'interface Abis, deux types d'information de signalisation circulent:
- des messages de signalisation échangés avec la BTS, transportés dans un canal spécifique de signalisation, qui permettent de contrôler à la fois l'équipement BTS lui même et les terminaux mobiles (MS) qui sont en relation avec elle. Les messages correspondants sont spécifiés par le GSM dans la spécification TS 08.58
- des informations intrabande (« in band » en anglais) de contrôle qui sont transmises dans le même flux que les informations de trafic. Ces informations sont transmises, au sein des trames TRAU. Ces informations sont des « bits de contrôle », complémentaires des « bits de données », dont la signification est expliquée dans les spécification TS 08.60 / 08.61

Les informations de signalisation du premier type, constituées de messages protocolaires, sont véhiculées sur des intervalles de temps dédiés, avec typiquement sur l'interface Abis un débit de 64 kbit/s.

Chaque lien à 2 Mbit/s de l'interface Abis dispose de 31 intervalles de temps (TS pour « Time Slots » en anglais) qui sont alloués aux voies de signalisation ou aux canaux de parole. Selon la typologie du réseau et les choix de codage de la parole, un lien à 2 Mbit/s sur l'interface Abis peut typiquement être utilisée pour supporter jusqu'à dix canaux d'accès radio « transmission », dits TRX (en anglais « Transceiver »). Chaque TRX supporte lui-même huit canaux GSM dédiés à la parole à plein débit FR ou seize canaux GSM à demi débit HR. La réservation correspondante des canaux de parole sur l'interface Abis représente pour chaque TRX une allocation de 2 TS à 64 kbit/s (8* 16 kbit/s = 16* 8 kbit/s= 128 kbit/s).

Selon le dimensionnement du réseau GSM, la BTS est équipée d'un nombre N de TRXs , ce qui induit une occupation proportionnelle du nombre de TS sur l'interface Abis.

### 2.2 Les applications satellite

On décrit en relation avec la figure 3 un réseau GSM classique mettant en oeuvre une liaison radio de type satellite.

Le réseau de connexion GSM comprend alors, classiquement, un MSC 30, un BSC 31 ainsi qu'une station de base BTS 32, assurant les communications aux utilisateurs disposant d'un terminal mobile 34 et localisés dans la zone de couverture de la BTS 32.

De plus, une liaison radio 36 est mise en oeuvre au niveau de l'interface Abis, entre le BSC 31 et la BTS 32. Cette liaison radio 36 est assurée par un système radio par satellite contenant deux antennes 331 et 332 d'émission-réception de chaque côté de l'interface Abis, et un satellite 35.

On notera qu'il est possible en fait d'insérer une liaison radio par satellite au niveau de chacune des interfaces mises en oeuvre dans le système GSM : A, Abis, Ater. Mais l'insertion d'une telle liaison satellite au niveau de l'interface Abis, c'est-à-dire entre un BSC et des BTS, est très souvent préférée pour étendre le service GSM à des localisations géographiques distantes et de faible densité d'utilisateurs avec des coûts d'infrastructure minimaux.

De façon à éviter toute confusion, il est important de noter que dans une telle implémentation, deux types de systèmes radio sont mis en oeuvre, mais qu'ils n'ont pas le même rôle :
- Le réseau GSM en lui-même utilise de premières liaisons radio pour communiquer, et notamment pour effectuer la transmission entre les BTS et les utilisateurs de terminaux mobiles.
- Le système satellite consiste en une seconde liaison de transmission radio. Classiquement, un dispositif appelé Hub alloue les ressources radio nécessaires à la transmission des données par satellite entre BSC et BTS.

Dans la suite de la description, on parle de ressources radio : cette dénomination concerne alors la liaison de transmission radio par satellite, mais elle peut être étendue selon l'invention à tout autre type de liaison radio à ressources partagées, comme par exemple des liaisons par faisceaux hertziens (dits « microwave » en anglais), ou les sytèmes de type LMDS (« Local Multipoint Distribution Systems »), ou d'autres systèmes terrestres de transmission de type WiFi, WiMAX (« Wireless Microwave Access » en anglais), etc.

La présente invention s'applique notamment aux configurations utilisant un canal satellite géré en mode DVB-S / DVB-RCS.

Concrètement, lorsque deux utilisateurs sont en communication, la réalisation usuelle dans un réseau GSM demande que le flux de parole transite par le BSC, ainsi que par le MSC. Ceci nécessite alors l'allocation de ressources sur deux canaux de la liaison satellite : la voie montante et la voie descendante. Ceci reste notamment valable quelles que soient la position des utilisateurs (appelant et destinataires), et particulièrement lorsque les deux utilisateurs sont situés dans une même cellule ou dans deux cellules proches.

### 3. Inconvénients de l'art antérieur

A ce jour, la mise en oeuvre d'une liaison radio, par satellite notamment, entre une BTS et le BSC correspondant d'un réseau cellulaire entraîne systématiquement, lors d'une communication entre deux utilisateurs desservis chacun par une BTS connectée par satellite, l'allocation de deux canaux radio : un premier pour l'appelé et un second pour l'appelant.

En effet, l'application usuelle demande que la parole « remonte » jusqu'au MSC du réseau GSM. Le flux de parole passe alors deux fois par le satellite et ceci même si la communication en question présente un caractère local. Une communication locale souffre donc inutilement de l'ajout de deux fois le délai de transfert par satellite, de l'ordre de 250 millisecondes. L'existence de ce double lien satellite ajoute donc non seulement un temps de transmission non négligeable qui rejaillit sur la qualité de la communication perçue par les utilisateurs, mais elle est de plus très coûteuse.

Cette situation a été jusqu'à présent acceptée.

Ainsi, il n'existe à ce jour aucun moyen permettant de spécifier le caractère local d'un appel. Les techniques actuelles ne gèrent donc pas une telle configuration de manière optimisée.

La Demande de brevet français FR 2870662 divulgue un dispositif de routage local de trafics locaux au sein d'un réseau de communication radio. Lorsqu'une corrélation des données de signalisation est déterminée, le dispositif de routage route localement et directement le trafic d'un premier canal montant vers un second canal descendant et d'un second canal montant vers un premier canal descendant. Cependant, cette demande de brevet ne propose pas d'autres solutions permettant de détecter si l'appelant et appelé se situent dans une même zone locale.

Dans le domaine de l'invention, le document US 5 761 195 A concerne un procédé d'interconnexion de terminaux mobiles (notamment un terminal mobile source et un terminal mobile destination) dans un réseau cellulaire de radiocommunications mobiles comprenant une pluralité de noeuds interconnectés afin de faciliter les communications entre les terminaux mobiles.

Plus précisément, le procédé décrit dans ce document US 5 761 195 A comprend des étapes de réception d'informations de contrôle d'appel provenant du terminal source et du terminal destination et une étape de calcul à partir des informations de contrôle d'appel reçues d'une connexion source-destination optimale, qui vise à réduire la longueur du chemin de transmission tout en assurant que suffisamment de ressources seront disponibles pour la transmission (cf. col. 4, 1. 24-46).

EP1528714 décrit un un serveur d'un réseau de communication qui compare les localisations reçus des appareils sans fils pour détecter si deux appareils sont proches l'un de l'autre.

### 4. Objectifs de l'invention

L'invention a notamment pour objectif de pallier ces différents inconvénients de l'état de la technique.

Un premier objectif de l'invention consiste à fournir une procédure unique de transmission indépendamment de la localisation relative des stations appelante et appelée, sans impact sur l'architecture globale du réseau cellulaire mis en oeuvre. Les équipements du réseau cellulaire ne sont donc pas modifiés par le système de l'invention, qui reste totalement transparent vis-à-vis des BTS et du BSC notamment.

L'invention a notamment pour objectif de fournir une technique qui assure un gain important en termes de délai et de coût par rapport aux techniques classiques de l'art antérieur dans des situations de communications locales, c'est-à-dire lorsque les stations en communication sont suffisamment proches l'une de l'autre.

L'objectif est de fournir une telle technique particulièrement adaptée au cas de la téléphonie cellulaire

Un objectif supplémentaire de la technique de l'invention est de diminuer les coûts d'un système de communication, tout en maintenant une qualité de service équivalente, voir meilleure que celle obtenue avec les techniques classiques.

L'invention a en outre pour objectif de fournir une telle technique qui soit particulièrement optimisée et adaptée au transfert de données pour les communications phoniques, c'est-à-dire pour le transfert de la voix, et plus généralement au transfert de données en temps réel, de type circuit.

De ce fait, un objectif supplémentaire de l'invention est de proposer une telle technique qui permette d'identifier de façon fiable le caractère local d'un appel.

Un autre objectif de l'invention est de fournir une telle technique qui s'implémente aisément aussi bien dans une architecture standard de réseau GSM, mais aussi de ses extensions, telles que l'UMTS et plus généralement l'ensemble des standards du projet 3GPP (pour « Third Génération PartnerShip » en anglais), ou tout autre réseau cellulaire, dans lequel est mise en oeuvre une liaison radio, de type satellite notamment.

L'invention a en outre pour objectif d'être aisément intégrée dans une telle architecture à laquelle est ajoutée une liaison de type Internet, selon le protocole Internet IP notamment.

Un objectif supplémentaire de l'invention est de fournir une technique qui n'entraîne aucune perte d'information si un utilisateur change de cellule en cours de communication, c'est-à-dire dans le cas d'un transfert intercellulaire (« handover » en anglais). Plus généralement, l'objectif est qu'aucune fonction ou service ne soit détérioré par la mise en oeuvre de l'invention.

### 5. Exposé de l'invention

Ces différents objectifs, ainsi que d'autres qui apparaîtront par la suite, sont atteints à l'aide d'un procédé selon la revendication 1, d'un réseau cellulaire selon la revendication 21, d'un équipement local détecteur selon la revendication 26 et un équipement local adaptateur selon la revendication 27. Par exemple, c'est le même dispositif qui met en oeuvre les étapes d'analyse et de bouclage local précité.

L'invention repose ainsi sur une approche tout à fait nouvelle et inventive de bouclage direct du flux de données échangées entre un appelant et un appelé lorsque ceux-ci sont localisés dans une même zone locale. L'invention met en oeuvre pour ce faire une stratégie de détection selon laquelle on espionne et analyse le flux de signalisation contenant une succession de messages uniquement destinés aux équipements du réseau cellulaire, et, ou, ou en combinaison, les données échangées entre les usagers. En fonction des résultats de cette analyse, le procédé de l'invention boucle les données à transmettre pendant une communication, si cette dernière présente un caractère local, et ceci de façon totalement transparente pour le réseau cellulaire, qui n'a aucune connaissance de ce bouclage. Le fonctionnement du réseau cellulaire n'est alors aucunement perturbé.

Ce procédé permet alors de gagner judicieusement en termes de délai de transmission. De plus, il s'applique à tout type de données, telles que des données à forte contrainte temps réel, comme la parole, mais aussi aux autres types de données classiquement échangées via un réseau cellulaire, à savoir un SMS, une image, etc.

De façon avantageuse, la zone locale est définie par la zone de couverture en aval de la station de base, ou d'un ensemble des stations de base.

Ainsi, le procédé permet non seulement de reboucler les données transmises entre deux utilisateurs lorsque leurs terminaux mobiles dépendent d'une même station de base, c'est-à-dire lorsqu'ils sont situés dans une même cellule du réseau cellulaire, mais aussi lorsque les utilisateurs sont situés par exemple dans des cellules voisines. Dans ce cas, ils dépendent de deux stations de base différentes et le procédé est mis en oeuvre en amont d'un ensemble de stations de base.

On note que dans le cas du GSM, une station de base est dite BTS, et le procédé est alors mis en oeuvre en amont d'une liaison Abis ou d'un ensemble de liaisons Abis. Cependant, de façon plus générale, l'invention s'applique aussi à tout réseau cellulaire mettant en oeuvre des stations de base, telles que l'UMTS notamment, qui correspond à une évolution du réseau GSM.

Avantageusement, la station de base étant contrôlée par un contrôleur de stations de base parmi une pluralité de contrôleurs de stations de base et la ou les stations de base étant connectées avec le ou les contrôleurs de stations de base via un réseau de connexion, le bouclage local consiste à acheminer tout ou partie des données échangées entre l'appelant et l'appelé sans transit par le ou les contrôleurs de stations de base.

Ainsi, dans un réseau cellulaire tel que le GSM par exemple, dans lequel les stations de base sont contrôlées par un contrôleur de stations de base, dit BSC, le procédé de l'invention met en oeuvre un bouclage entre deux utilisateurs en communication, de façon que les données rebouclées ne sont pas remontées jusqu'au BSC. Elles sont directement rebouclées. Ceci diffère donc d'une mise en oeuvre classique d'un réseau cellulaire, dans lequel toutes les données sont systématiquement transmises au contrôleur de stations de base, quelle que soit la localisation des interlocuteurs. Le procédé de l'invention permet alors d'économiser des étapes de double compression/décompression des données, ou encore de transcodage, notamment dans le cas particulier de la parole, et ceci de façon transparente pour le réseau cellulaire, qui n'a pas connaissance du bouclage.

De façon avantageuse, la succession des messages de signalisation formant un flux de signalisation, la stratégie de détection inclut une étape d'injection dans les flux de signalisation d'au moins une information de traçage au niveau de la zone locale de l'appelant et/ou de l'appelé, et à reconnaître l'information de traçage dans la zone locale de l'autre des interlocuteurs.

Dans un mode de réalisation de l'invention, l'invention met ainsi en oeuvre sa stratégie de détection du caractère local d'un appel en injectant une information de traçage dans les flux de signalisation correspondant à chacun des deux interlocuteurs en cours de communication. On entend par flux de signalisation la succession des messages de signalisation. L'injection d'une information de traçage dans le flux de signalisation peut alors consister à injecter un message spécifique parmi les messages déjà existants, ou bien à injecter une information au sein des messages eux-mêmes. L'objectif est alors de retrouver cette même information dans chacun des flux de signalisation de l'appelant et l'appelé.

Avantageusement, l'information de traçage est constituée par au moins une information représentative de la zone locale, et/ou un marqueur spécifique à l'appel au sein des appels en cours dans la zone locale.

L'invention détecte dans le flux de signalisation une information relative à la localisation des interlocuteurs ainsi que, si nécessaire, un marqueur relatif à l'appel en lui-même.

De façon avantageuse, les messages de signalisation sont conformes au standard GSM et l'information de traçage est encodée dans le champ User-User du message CONNECT ou du message SETUP.

Dans le cas des réseaux cellulaires selon le standard GSM ainsi que ses évolutions, l'invention utilise le champ User-User du message de signalisation CONNECT ou SETUP pour injecter l'information spécifiant la localisation des utilisateurs du réseau cellulaire.

Avantageusement, la phase de détection comprend une étape préalable de détection de la corrélation temporelle entre l'émission et la réception de messages de signalisation prédéterminés.

Ainsi, en plus de l'injection d'informations, la stratégie de détection du caractère local d'un appel met en oeuvre une détection du contenu préalable des flux de signalisation. En d'autres termes, si un événement dans un demi-appel implique, de par le standard, un autre événement dans l'autre demi-appel, la détection de la succession des deux événements avec un délai raisonnable, est considérée comme une indication qu'une communication locale est susceptible d'avoir lieu.

De façon avantageuse, les événements prédéterminés appartiennent au groupe comprenant :
- transmissions des messages de SETUP (départ) et PAGING (arrivée)
- transmissions des messages de CONNECT (arrivée) et CONNECT (départ).

On trouve de tels messages de signalisation dans un réseau cellulaire de type GSM ou dans les évolutions de ce standard.

Avantageusement, la stratégie de détection s'effectue en deux temps :
- mise en oeuvre dans un premier temps de l'étape de détection de la corrélation temporelle entre les transmissions de messages de signalisation prédéterminés ;
- mise en oeuvre dans un second temps de l'étape d'injection de l'information de traçage si et seulement si une corrélation temporelle a été détectée.

Suite à une première étape de détection de la corrélation temporelle, le procédé peut, dans un mode de réalisation, mettre en oeuvre une étape d'injection d'information, de façon à confirmer ou non qu'une communication en cours est locale.

Avantageusement, la voie de trafic de la communication acheminant des données à contraintes de temps réel, tel qu'un flux de parole, la stratégie de détection inclut une phase d'analyse directe des données à contrainte de temps réel.

Dans le mode de réalisation particulier de la phonie par exemple, dans lequel les données transmises sont du type de la voix, la stratégie de détection du caractère local d'un appel est en mesure d'analyser directement le flux de parole.

Avantageusement, les données incluant un flux de parole, la phase d'analyse du flux de parole comprend une étape supplémentaire d'injection dans le flux de parole d'un signal de type DTMF au niveau de la zone locale de l'un des interlocuteurs (appelant ou appelé) et à reconnaître l'information de traçage dans la zone locale de l'autre des interlocuteurs.

Ainsi, selon une même approche que celle mise en oeuvre sur le flux de signalisation, la stratégie de détection propose d'injecter directement une information de traçage dans le flux de parole lui-même, pour que celle-ci soit reconnue par le procédé qui est alors en mesure de détecter le caractère local d'une communication.

De façon avantageuse, les données incluant un flux de parole, et le réseau cellulaire étant conforme au standard GSM, l'étape d'analyse du flux de parole est mise en oeuvre après que le mode TFO ait été activé.

En d'autres termes, il est possible de mettre en oeuvre le procédé de l'invention dans un mode de réalisation particulier, dans lequel le mode TFO est activé.

Avantageusement, le mode TFO étant activé, l'étape d'analyse directe comprend une phase d'injection d'au moins une information spécifique dans le flux de parole pour accélérer la détection de l'identité entre les deux flux par rapport à la simple comparaison de la parole.

De façon avantageuse, le réseau de connexion incluant au moins une liaison de type radio à ressources partagées entre la ou les stations de base (aval) et le ou les contrôleurs de stations de base (amont), la zone locale est définie par la zone située en aval d'un point de connexion à la liaison de type radio à ressources partagées.

En d'autres termes, l'invention peut être mise en oeuvre dans le cas spécifique où la liaison entre un ensemble de contrôleurs de stations de base et les stations de bases d'un réseau cellulaire est supportée par une liaison radio à ressources partagées. Dans ce mode de réalisation, le procédé de l'invention met en oeuvre un bouclage local dès lors que deux utilisateurs sont localisés en aval d'un point de terminaison de la liaison radio entre le ou les BTSs et le ou les BSCs. Dans de mode de réalisation particulier de l'invention, le bouclage local présente un très grand intérêt puisqu'il est effectué en aval de la liaison radio : il permet ainsi d'économiser une grande quantité d'allocation de ressources radio, très coûteuses à ce jour.

Avantageusement, la deuxième phase de déclenchement d'une opération de bouclage local met en oeuvre un bouclage des données entre l'appelant et l'appelé, de façon qu'aucune des données ne soit perdue.

En effet, si le bouclage est détecté et activé en cours de communication, il est important qu'aucune des données ne soit perdue, même si l'allocation des canaux de communication change pendant la communication.

De façon avantageuse, la deuxième phase de déclenchement d'une opération de bouclage comprend une phase préliminaire de stockage dans une mémoire tampon des données issues du destinataire, de façon à assurer une continuité dans le flux des données à transmettre.

Ainsi, la mémoire tampon assure de ne perdre aucune donnée à transmettre, pendant une communication, et ce même si les canaux alloués pour la communication varient.

Avantageusement, le procédé de l'invention comprend les étapes supplémentaires de :
- recherche, détection et analyse dans les messages de signalisation d'informations indicatives d'un déplacement de l'appelé et/ou du destinataire, en cours de communication.
- adaptation des canaux de communication selon le résultat de l'étape de recherche, détection et analyse.

En d'autres termes, l'invention gère les déplacements inter cellulaires (« handovers » en anglais) des interlocuteurs, en cours de communication. Ainsi, le procédé permet de s'adapter, dans le cas où une communication normale devient locale ou inversement, de façon à établir ou non, ou supprimer ou non, un bouclage.

De façon avantageuse, l'information indicative d'un déplacement est constituée par un message de signalisation indicatif des caractéristiques d'une nouvelle cellule du réseau cellulaire entre l'appelé et/ou l'appelant en déplacement.

Le procédé de l'invention gère et analyse donc les déplacements toujours selon une même approche de détection et d'analyse des messages de signalisation destinés au réseau cellulaire.

Avantageusement, les messages de signalisation sont conformes au standard GSM, et le message est le message HANDOVER_COMMAND.

De façon avantageuse, l'étape d'adaptation comprend les phases de :
- adaptation du bouclage si le résultat de l'analyse de l'information indicative d'un déplacement indique que l'appelant et/ou l'appelé change de cellule tout en restant dans la zone de bouclage ;
- arrêt de l'opération de bouclage si le résultat de l'analyse de l'information indicative d'un déplacement indique que l'appelant et/ou l'appelé sort de la zone de bouclage;

Le procédé de l'invention détecte et s'adapte à tout type de transfert intercellulaire, aussi bien dans le cas où l'un des interlocuteurs change de cellule tout en restant dans la zone de bouclage (le bouclage est maintenu), que dans le cas où il sort de la zone de bouclage (le bouclage est coupé et le fonctionnement devient « classique »).

Dans une mode de réalisation de l'invention et en situation de bouclage, tout ou partie desdites données échangées entre l'appelé et l'appelant, localisés dans la zone de bouclage, sont transmises d'une part directement à l'autre interlocuteur par bouclage et d'autre part à au moins un des contrôleurs de stations de base.

Ce mode de réalisation permet de répondre aux exigences d'écoute légale, selon lesquelles toute information transmise doit transiter par le MSC. L'objectif de gain en termes de délai et d'économie de compression/décompression est maintenu, l'invention permet alors de n'utiliser la liaison radio seulement pour remonter les données. Ceci diffère des techniques classiques beaucoup plus coûteuses, selon lesquelles les données sont remontées jusqu'au BSC et en reviennent.

Selon un mode de réalisation spécifique du procédé de l'invention, ladite première phase de détection est mise en oeuvre dans un premier module situé dans une partie centrale du réseau, et ladite deuxième phase de déclenchement d'une opération de bouclage local est mise en oeuvre dans ladite zone locale dudit réseau cellulaire sous ommande dudit premier module.

L'invention concerne par ailleurs un réseau cellulaire mettant en oeuvre le procédé précédemment décrit.

Selon l'invention, dans un tel réseau cellulaire, chaque BTS, ou chaque ensemble de BTS relié à un même équipement de transmission vers les BSC, est avantageusement équipé d'un équipement local adaptateur comprenant :
- des moyens de détection du besoin de bouclage ;
- des moyens de réalisation de l'opération de bouclage ;
- des moyens de détection du besoin de débouclage ;
- des moyens de réalisation du l'opération de débouclage,
les moyens mettant en oeuvre le procédé tel que décrit précédemment.

Selon un autre mode de réalisation du réseau cellulaire selon l'invention,
- d'une part chaque zone locale constituée d'un BTS, ou d'un ensemble de BTS reliés à un même équipement de transmission vers les BSC, est équipée d'un dispositif local adaptateur et,
- d'autre part le réseau comprend un dispositif central optimiseur.

Dans ce mode de réalisation,
- ledit dispositif optimiseur central possède des moyens de détection d'un besoin de bouclage et/ou de débouclage dans une desdites zones locales ;
- le dispositif optimiseur comprend des moyens d'émission d'une commande de bouclage et/ou de débouclage à tout dispositif adaptateur situé dans une zone locale dans laquelle il a détecté ledit besoin de bouclage et/ou de débouclage ;
- chacun desdits dispositifs adaptateurs possède des moyens de réalisation de l'opération de bouclage ou de débouclage sous contrôle de la commande de bouclage ou de débouclage respectivement ;
lesdits moyens mettant en oeuvre le procédé tel que décrit précédemment.

L'invention concerne tout réseau cellulaire, du type comprenant au moins une station de base contrôlée par un contrôleur de stations de base, nommé BSC, et une infrastructure de réseau avec lequel le BSC est en connexion, l'infrastructure de réseau incluant :
- soit au moins une liaison de type radio à ressources partagées pour relier le ou les stations de base à leur BSC de contrôle ;
- soit au moins une liaison de type IP pour relier le ou lesdites stations de base à leur BSC de contrôle ;
- soit même une liaison d'amenée quelconque.

Enfin, l'invention concerne tout équipement local détecteur et/ou adaptateur mettant en oeuvre le procédé tel que décrit précédemment.

### 6. Liste des figures

D'autres caractéristiques et avantages de modes de réalisation de l'invention apparaîtront à la lecture de la description suivante de plusieurs modes de réalisation préférentiel de l'invention, donnés à titre d'exemple indicatif et non limitatif (tous les modes de réalisation de l'invention ne sont pas limités aux caractéristiques et avantages de ce mode de réalisation préférentiel), et des dessins annexés, dans lesquels :
- la figure 1, déjà présentée en relation avec l'art antérieur, illustre l'architecture du réseau GSM ;
- la figure 2, déjà introduite dans la partie art antérieur, schématise les interfaces mises en oeuvre dans un réseau cellulaire GSM ;
- la figure 3 concerne la mise en oeuvre d'une liaison radio par satellite dans un réseau GSM, selon l'état de la technique ;
- les figures 4A et 4B illustrent le bouclage local dans un réseau à liaison d'amenée (backhaul) satellitaire, selon un premier et un second modes de mise en oeuvre de l'invention dans lequel le bouclage intervient pour des utilisateurs situés dans une même cellule, ou dans deux cellules proches, respectivement ;
- la figure 5 concerne la remontée des flux de parole vers la BSC et le MSC ;
- les figures 6A et 6B illustrent la mise en oeuvre de l'invention dans un réseau à liaison d'amenée satellitaire, selon un troisième et un quatrième modes de réalisation dans lequel le bouclage intervient pour des utilisateurs situés dans une même cellule, ou dans deux cellules proches, respectivement ;
- les figures 7A et 7B présentent une variante possible de l'invention, selon des modes de réalisation similaires à ceux des figures 4A et 4B respectivement, dans le cas où la liaison d'amenée (backhaul) est constituée par un réseau IP
- les figures 8A et 8B de réalisation présentent une autre variante possible de l'invention, selon des modes de réalisation similaires à ceux des figures 6A et 6B respectivement, dans le cas où la liaison d'amenée (backhaul) est constituée par un réseau IP.

### 7. Description de différents modes de réalisation particuliers de l'invention

### 7.1 Principe général

L'invention repose alors sur une approche tout à fait nouvelle et inventive de transmission de flux de parole dans un réseau GSM mettant en oeuvre une liaison de transmission radio, dans le cas où deux utilisateurs dépendent d'une même station de base ou de deux stations de base proches, en introduisant un dispositif connectant localement deux stations mobiles : on réalise un bouclage local lorsque deux utilisateurs du réseau cellulaire sont en communication dans une zone dite zone de bouclage.

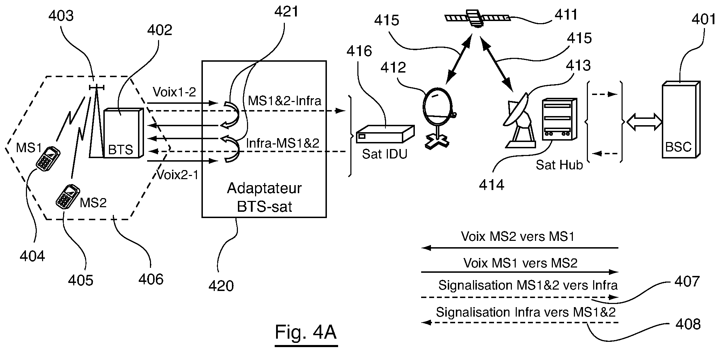

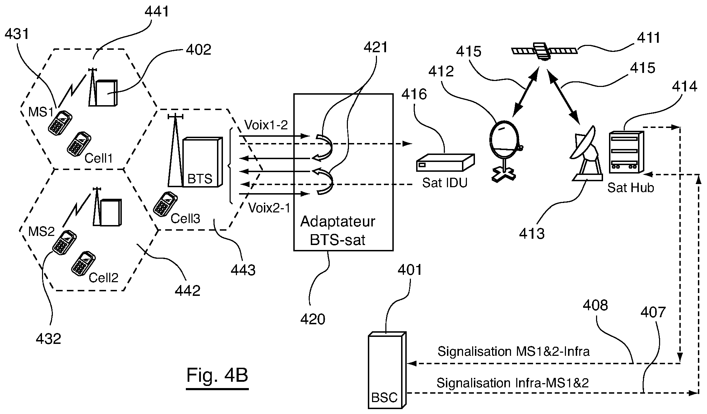

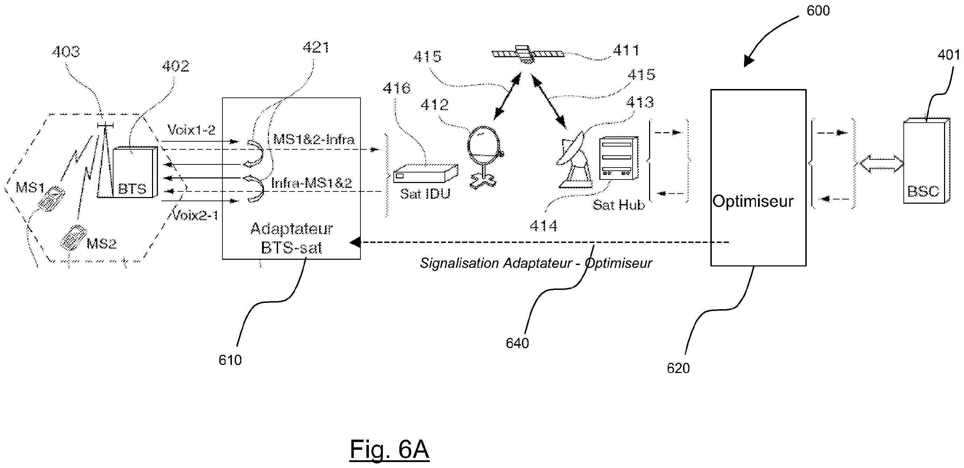

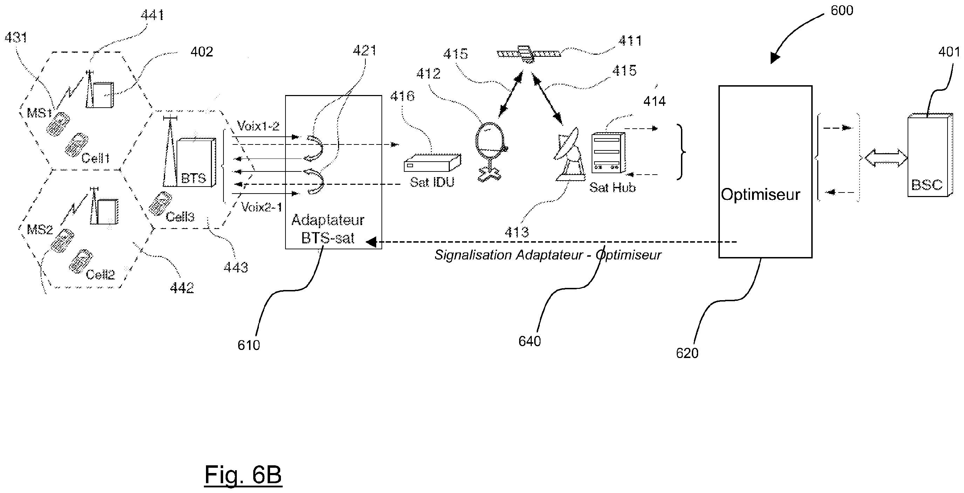

Le principe général de bouclage local de l'invention dans le cas d'un réseau à liaison d'amenée radio à ressources partagées, est illustré en relation avec les figures 4A et 4B et 6A et 6B, distinguant quatre modes de réalisation de bouclage local selon l'invention.

En relation avec la figure 4A, on considère un réseau cellulaire contenant un BSC 401, contrôlant une station de base BTS 402. Cette BTS 402 assure la transmission des données de parole entre deux utilisateurs disposant chacun d'une station mobile MS1 404 et MS2 405, via son antenne 403 hertzienne. Dans ce mode réalisation, les deux utilisateurs sont situés dans une même cellule 406 du réseau cellulaire, donc dans la zone de bouclage.

La liaison entre le BSC 401 et sa BTS 402 correspondante est assurée par un ensemble d'équipements de radiocommunication comprenant notamment un satellite géostationnaire 411, ainsi que deux antennes 412 et 413 d'émission et de réception formant ainsi une liaison 415 radio sur laquelle les données de trafic et de signalisation, typiques du système GSM, transitent. Cette liaison 415 radio est en outre assurée par un dispositif 414, dit Hub, chargé d'allouer les ressources radio nécessaires au transfert des données, selon les besoins de trafic du réseau GSM. Le Hub fonctionne en communiquant avec un dispositif 416 IDU (pour « Indoor Unit » en anglais), le hub et l'IDU intégrant ensemble toute l'intelligence et la logique de contrôle du réseau radio.

La liaison radio est donc chargée de transporter un ensemble d'informations relatives au réseau GSM, destinées uniquement au MSC ou à la BTS. Il permet plus particulièrement de faire transiter les informations de signalisation, via deux flux 407 et 408, correspondant chacun à l'appelant et à l'appelé.

Selon l'invention, un dispositif 420 analyse alors ces flux, dans un de ses modes de réalisation, de façon à détecter le caractère local de l'appel.

Dans ce cas précis, le dispositif 420 de l'invention détecte que deux utilisateurs situés dans la même cellule 406 sont en communication, et met alors en oeuvre un bouclage 421

Dans un second mode de réalisation, le dispositif de l'invention 420 met en oeuvre un bouclage local 421, illustré par la figure 4B. Dans cette configuration, deux utilisateurs disposant chacun d'une station mobile 431 et 432 sont situés dans deux cellules 441 et 442 distinctes et voisines. Chacune de ces cellules est couverte en réseau par une BTS 402. Ces deux cellules sont de plus situées à proximité d'une troisième cellule 443, couverte par une troisième BTS. Les trois BTS 402 sont situées en aval du même dispositif 420 de l'invention, par rapport à la liaison radio.
Selon un principe similaire au premier mode de réalisation de bouclage local présenté, le dispositif 420 de l'invention analyse le contenu des messages de trafic 407 et 408 et lorsqu'il détecte le caractère local d'un appel, met en oeuvre un bouclage, même si deux utilisateurs sont localisés dans deux cellules différentes.

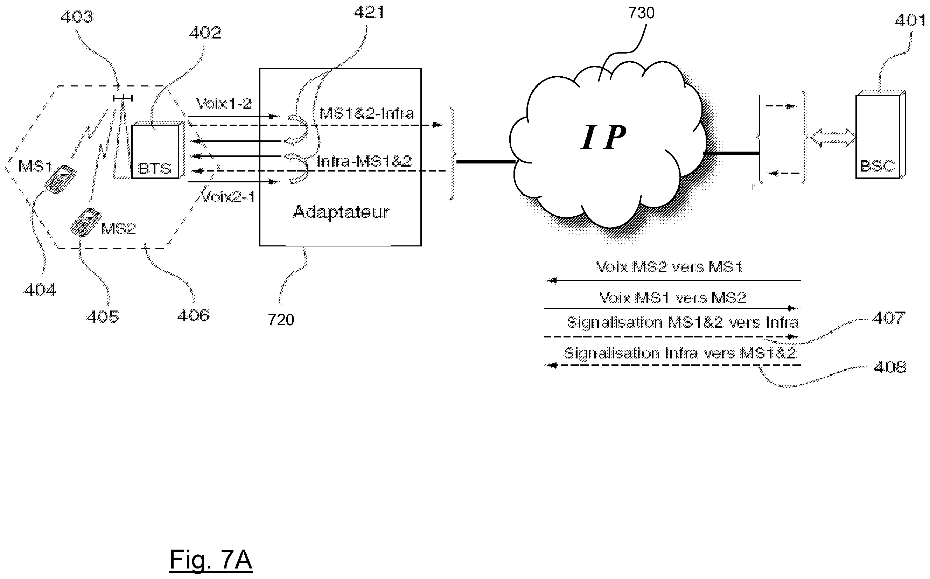

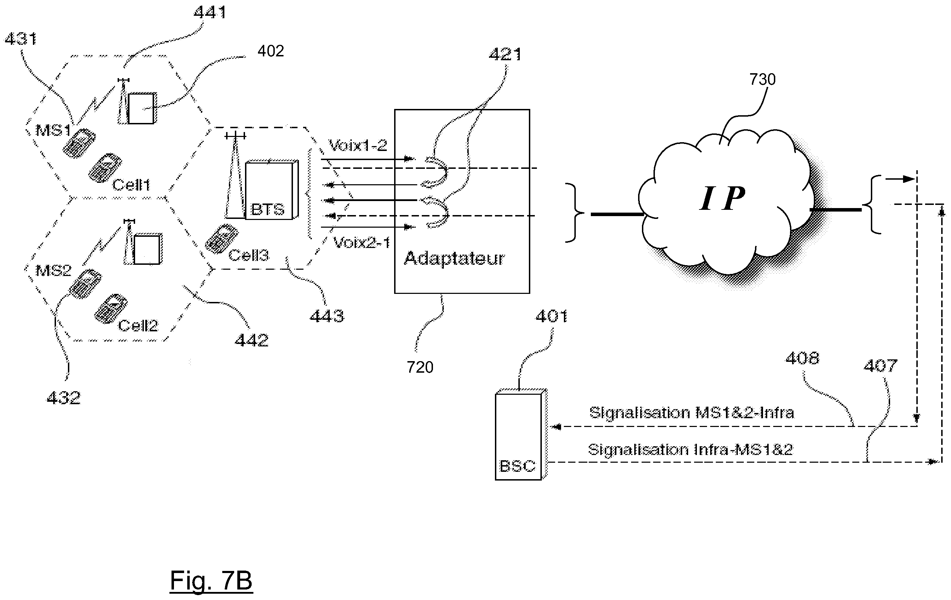

On notera incidemment que ces deux modes de réalisation sont également applicables à un réseau dont la liaison d'amenée 730 est un réseau IP, comme représenté en figures 7A et 7B. Dans un tel cas, un dispositif adaptateur 720 remplit substantiellement les mêmes fonctions de détection et de déclenchement du bouclage que le dispositif 420.

Dans un troisième et un quatrième modes de réalisation, le système fait intervenir deux dispositifs, 610 et 620 représentés sur les figures 6A et 6B. Le principe est similaire au premier mode de réalisation, mais il existe une séparation des fonctions qui, dans le premier et le deuxième modes de réalisation, se trouvaient regroupées dans le dispositif 420 des figures 4A et 4B. Cette séparation est effectuée en répartissant les fonctions de détection et de déclenchement du bouclage (et/ou du débouclage) entre les équipements 610 et 620 comme suit :
- le dispositif de détection (ou dispositif optimiseur) 620, situé dans une zone centrale du réseau (au-delà de la liaison d'amenée 630 constituée par le satellite 411 et les équipements associés), analyse le flux des informations de signalisation de façon à détecter le caractère local des appels ;
- le cas échéant le dispositif de détection 620 envoie une commande au dispositif 610 par un canal interne 640 reliant les dispositifs 620 et 610 ;
- en réponse à cette commande, le dispositif 610, qui se trouve dans une zone locale à la périphérie, à proximité d'une ou plusieurs BTS, met en oeuvre le bouclage (ou le débouclage).
On notera que cette architecture répartie est applicable aux deux situations précédemment décrites : bouclage au sein d'une même cellule (Figure 6A) ou bouclage entre deux cellules dépendant du même équipement local 610 (Figure 6B).

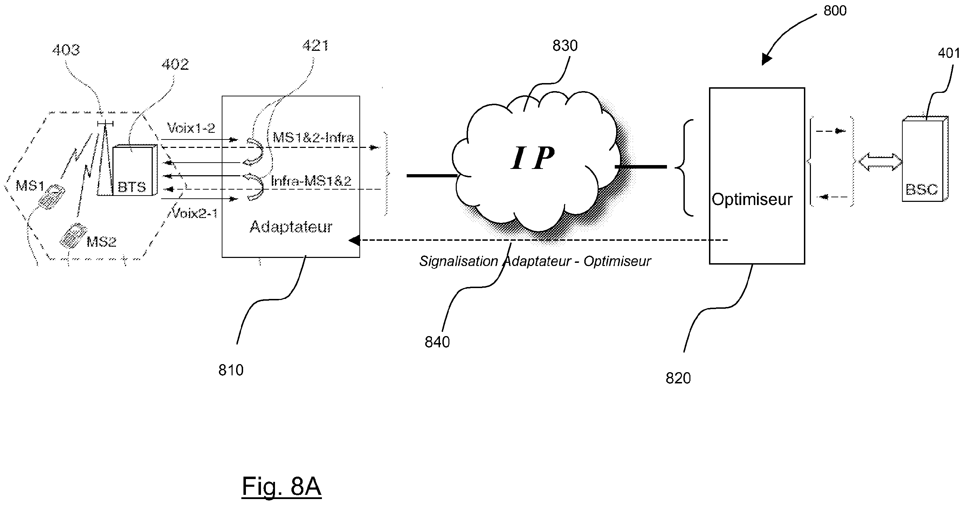

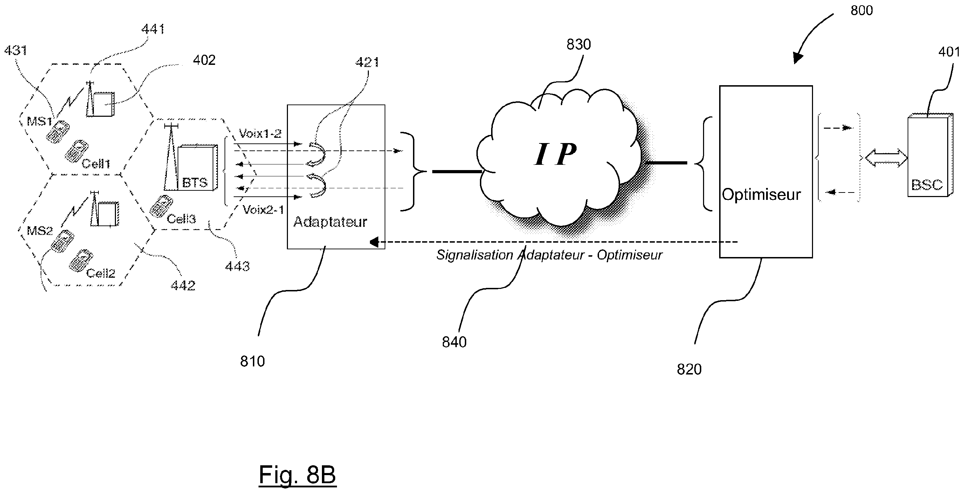

Le même principe de répartition entre un dispositif central de détection 820 situé dans une zone centrale 800 du réseau et un dispositif local 810 de déclenchement de bouclage situé dans une zone locale peut également être mis en oeuvre dans un réseau dont la liaison d'amenée 830 est un réseau IP, comme représenté en figures 8A et 8B. Dans ce cas, les commandes de bouclage sont acheminées par un canal de signalisation 840 reliant le dispositif de détection 820 au dispositif 810 de déclenchement de bouclage. Les figures 8A et 8B correspondent aux cas déjà mentionnés d'un bouclage soit au sein d'une même cellule (figure 8A), soit de deux cellules contrôlées par un même BTS 402 (figure 8B) respectivement.

Avantageusement, les commandes 840 de bouclage (et de débouclage) sont acheminées via un canal de la liaison IP. De la même façon, dans les modes de réalisation des figures 6A et 6B, les commandes 640 sont avantageusement acheminées via un canal de la liaison radio 415.

En résumé, le dispositif de l'invention met en oeuvre un bouclage local dans deux cas de figure distincts : d'une part (figures 4A, 6A, 7A, 8A) lorsque deux utilisateurs sont en communication et sont situés dans une même cellule (ils sont tous les deux dans la zone de couverture d'une même station de base BTS), et d'autre part (figures 4B, 6B, 7B, 8B) lorsque deux utilisateurs sont en communication avec deux BTS voisines, mais dont l'interface Abis est relié au même dispositif adaptateur connecté à un même terminal radio par satellite.

Toujours pour résumer, il existe aussi différentes implémentations, selon que
- l'analyse des informations de signalisation et l'exécution du bouclage et/ou du débouclage se font dans le même équipement, à la périphérie et colocalisé avec les BTS (figures 4 et 7)
- ou l'analyse se fait dans un équipement central qui contrôle une multiplicité d'équipements à la périphérie, exécutant le bouclage et/ou le débouclage sous le contrôle de l'équipement central (figures 6 et 8).

Dans ces différents cas, les flux de parole sont alors rebouclés en amont de la ou des BTS juste en aval de la liaison radio (figures 4 et 6), ou de la liaison IP (figures 7 et 8). Cette dernière n'est alors pas utilisée pour les données échangées entre appelant et appelé, c'est-à-dire que, contrairement aux techniques classiques, les données de parole ne remontent pas jusqu'au BSC et au MSC situés en amont de la liaison d'amenée (radio, IP ou autre). Ainsi, dans le cas d'une liaison satellitaire, on économise deux canaux radio bi-directionnels.

On décrit dans la suite de cette description une technique de détection du caractère local d'un appel, puis une technique de mise en oeuvre du bouclage de la parole, dans un mode de réalisation particulier.

### 7.2 Stratégie de détection du caractère local d'un appel

De façon à réaliser le bouclage de la parole, il est avant tout nécessaire de détecter de façon fiable la localisation relative de deux utilisateurs impliquées dans une même communication.

Dans un réseau cellulaire tel que le système GSM, dès qu'un utilisateur émet ou reçoit un appel, les équipements génèrent une suite d'échanges de messages de signalisation, réalisant un « appel départ » ou un « appel arrivée ». Le réseau gère donc une quantité importante de « demi-appels » de ce type. Lorsque deux utilisateurs sont en communication, le demi-appel départ de l'appelant est fortement corrélé à le demi-appel arrivée du destinataire.

Une des problématiques majeures de la présente invention est donc de détecter, au sein du réseau, la correspondance entre deux demi-appels, et ainsi connaître, de façon fiable et sans erreur, le caractère local de l'appel.

L'apport principal de l'invention est en effet de fournir une stratégie d'optimisation du processus de détection de la possibilité de bouclage, et du bouclage lui-même.

La stratégie de détection du caractère local d'un appel développée par les inventeurs est basée sur l'exploitation de plusieurs approches, qui peuvent être regroupées en deux grandes catégories : un travail à titre principal sur le contenu des voies de signalisation, sans négliger le recours à une analyse du flux de parole lui-même.

### 7.2.1 Détection par analyse des messages de signalisation

Les inventeurs ont constaté qu'il n'existe pas, à ce jour, dans la signalisation de base d'un réseau GSM visible sur l'interface Abis, d'indicateurs permettant de corréler l'appel départ et l'appel arrivée correspondant.

Cependant, différentes informations sont communes aux deux parties de l'appel, et peuvent être utilisées pour corréler deux demi-appels.

Lors de la mise en communication d'un appelant et d'un destinataire, parmi les messages de signalisation contenus dans la voie de signalisation correspondant à chaque demi-appel, un message contient notamment un élément dit message de CONNECT (côté arrivée) et message de CONNECT (côté départ). Ces deux messages se succèdent dans cet ordre et le temps de réception entre les deux présente l'avantage d'être relativement répétitif, puisque aucun facteur aléatoire majeur n'intervient.

L'invention propose alors de se baser sur cette corrélation temporelle pour détecter que les deux demi-appels correspondent.

Cependant, au lieu d'étudier le contenu standard de la voie de signalisation, l'invention propose un second aspect d'étude selon lequel on injecte une information spécifique dans le flux de signalisation, qui sera destinée à être reconnue par un dispositif de l'invention, et permettra à ce dernier de détecter avec certitude que la communication est locale.

Il est nécessaire d'être vigilant quant au contenu de cette information injectée pour ne pas avoir un taux inacceptable de fausses détections par collision entre deux demi-appels sans relation. Pour cela, l'information injectée doit contenir une partie variable non répétable, tel qu'un identifiant de la cellule, ou un identifiant spécifique à l'entité auquel est ajouté un marqueur spécifique à l'appel.

Une difficulté supplémentaire liée à cette approche d'injection de données consiste à rendre cette information acceptable lorsque l'appelé est quelconque et situé dans un tout autre réseau. Le procédé de l'invention limite la fréquence d'apparition de ce cas de figure si l'étape d'injection est réalisée uniquement après la réponse au message PAGING contenu parmi le flux de messages de signalisation. La mise en oeuvre d'une étape de corrélation temporelle telle que définie précédemment, dans le flux de signalisation, permet en outre de limiter les cas d'injection d'information superflus.

La solution adoptée consiste alors à utiliser le champ User-User, qui est un champ optionnel apparaissant dans la voie de signalisation dans le message CONNECT. Plus précisément, il est envoyé au décroché dans le message CONNECT arrivée, puis recopié dans le message CONNECT départ.

Cet élément est alors ajouté à la volée, avec un contenu numérique suffisamment long, selon un code non répétable.

On note que, pour un bon fonctionnement de cette solution, le MSC du réseau cellulaire doit implanter la fonctionnalité User-User.

De façon à ne pas troubler un destinataire autre que celui éventuellement présent dans la zone de bouclage, le champ User-User est codé en IA5 (pour « International Alphabet 5 » en anglais), codage d'une séquence de caractères selon lequel chaque caractère est codé sur 7 bits. Avec une telle approche, un message intempestif risque d'être affiché par le portable de l'appelant lorsque celui-ci ne se trouve pas être dans la zone locale de l'appelé. L'éventuel test préalable de corrélation temporelle rend cet occurrence rare.

Une autre solution sans défaut consiste à réserver un code d'encodage spécifique à l'application. Ceci demande l'agrément des comités de normalisation, ce qui peut être obtenu par un support actif d'un opérateur par exemple. L'avantage d'une telle solution est de supprimer tout affichage intempestif du message User-User pour des destinataires non concernés.

La procédure est donc la suivante : le dispositif de l'invention, localisé, pour mémoire, en amont de la BTS couvrant la zone de bouclage dans laquelle se trouvent deux utilisateurs en communication, surveille dans les voies de signalisation l'arrivée d'un message CONNECT, aussi bien dans les demi-appels départ que dans les demi-appels arrivée. Lorsqu'un message CONNECT est envoyé au MSC du réseau cellulaire, c'est-à-dire du côté arrivée, le dispositif de l'invention modifie le message pour y inclure un champ User-User codé en IA5, encodant une identité et/ou une valeur aléatoire.

Si un message CONNECT du côté départ est détecté par le dispositif de l'invention avec un champ User-User de même contenu, les deux demi-appels sont réputés se correspondre.

### 7.2.2. Détection par analyse du flux de parole

Les inventeurs ont par ailleurs exploré les solutions offertes par le signal de parole lui-même. Là aussi, on envisage deux études : une première direction selon laquelle on cherche à détecter, ou corréler des informations communes aux flux de parole contenus dans deux demi-appels, et/ou une seconde direction selon laquelle on cherche à injecter dans les flux de parole des informations qui serviront à la détection du caractère local de l'appel.

L'information la plus fiable est en effet la corrélation directe des flux de parole. Une telle corrélation est réalisée au début de la communication, et déclenche le bouclage.

Classiquement, dans un réseau GSM, la parole est transmise en format comprimé entre la BTS et un transcodeur situé au niveau du MSC. Elle est alors convertie au format numérique PCM non compressé. Ce signal est ensuite à nouveau compressé pour être envoyé à la BTS desservant le second interlocuteur.

Ce double transcodage détruit alors la ressemblance des flux numériques de parole, il est donc très difficile de se baser sur ces flux pour une étude de la corrélation.

Cependant, il existe un mode de transmission, dit mode TFO (pour « Transcoder Free Opération » en anglais) qui évite ce double transcodage. La parole est transmise dans le réseau central, c'est-à-dire entres les dispositifs appelés TRAU (pour « Transcoder Rate Adapter Unit » en anglais) chargés de compresser les flux de parole. Le principe d'un tel mode de transmission est de transmettre la parole à la fois en mode PCM sur 6 bits par octet, et aussi la parole numérisée telle que fournie par le mobile sur 2 bits par octet. Le TRAU, s'il est activé en mode TFO, peut alors transmettre au mobile destinataire la parole numérisée telle que fournie par le mobile de départ : le double transcodage est ainsi évité et la corrélation entre les deux flux de parole est maintenue.

S'il est utilisé, le mode TFO doit être reconnu par le TRAU distant. Ceci est obtenu, selon le standard GSM, par un dialogue préalable entre les deux TRAU et distants, une fois que la connexion est effectivement établie, c'est-à-dire une fois que les message CONNECT de la voie de signalisation ont été reçus. Le dialogue établi est ensuite continu, en utilisant la capacité résiduelle entre les 16 kbits par secondes disponibles et ce qui est nécessaire pour la parole, à savoir au maximum 13 kbits par seconde pour un format comprimé.

L'activation de ce mode TFO présente donc l'avantage de rendre possible une comparaison entre les deux flux de parole, bloc numérique par bloc numérique. Dans ce mode, un bloc émis est retrouvé tel quel à la réception, avec un délai connu.

On note que la transmission à l'identique des flux de parole n'est faite par le récepteur qu'une fois qu'il a été vérifié que les deux TRAU sont en mode TFO : cette procédure crée un délai entre l'établissement de la communication et la détection qu'il s'agit bien du même flux sur les deux branches.

Selon une approche différente, il est possible d'injecter des informations dans le signal de parole en lui-même.

Une fois la connexion établie, l'invention propose, dans un mode de réalisation particulier, d'injecter notamment des signaux multifréquence à deux tonalités (DTMF pour « dual tone multifrequency » en anglais). L'étude de corrélation se fait alors sur les valeurs, mais aussi sur la longueur et sur le temps de retard des messages. Cependant, cette solution présente un risque d'être audible par le destinataire.

Dans le mode de réalisation dans lequel le mode TFO est activé, l'invention propose de mettre en clandestin des informations spécifiques. Ceci permet alors d'accélérer la détection de l'identité entre les deux flux, par rapport à une simple comparaison de la parole.

### 7.3 L'opération de bouclage de la parole

Pour plus de clarté, on se place dans le mode de réalisation dans lequel la détection du caractère local d'un appel est basée sur les réceptions successives et l'analyse des messages CONNECT (introduit au paragraphe 7.2.1 de la présente description).

L'homme du métier saura aisément transposer la technique présentée aux autres modes de détection précédemment introduits.

Lorsque qu'un message CONNECT est émis par le destinataire, la parole est en émission-réception. A la réception du côté appelant de ce message par le dispositif de l'invention, et si ce dernier détecte le caractère local d'un appel, la parole est bouclée directement du côté départ vers le côté arrivée, sans perte.

A l'inverse, pour pouvoir boucler la parole en sens inverse, c'est-à-dire de l'arrivée vers le départ, il est nécessaire d'être vigilant du fait qu'une partie de la parole est en transit via le MSC du réseau cellulaire. On rappelle qu'en cas de bouclage, les flux de paroles ne transitent plus par le MSC. Il est donc nécessaire d'assurer une transition au moment de l'opération de bouclage de la parole, de façon qu'aucune information ne soit perdue.

Pour ce faire, le dispositif de l'invention propose de tamponner la parole en provenance du destinataire, dans une mémoire tampon de taille adéquate. Ainsi, la parole en provenance du MSC est tout d'abord envoyée, puis la mémoire tampon prend le relais, en étant vidée progressivement, en enlevant les trames de silence, grâce à un algorithme de suppression de silences.

Ainsi, l'intégralité des trames de parole est correctement restituée : la qualité de service est équivalente aux techniques classiques.

Dans un troisième mode de réalisation, la parole est tamponnée dès le début de la communication, côté arrivée. Le flux originaire du MSC ne passe pas. Le bouclage est fait via le tampon, qui est vidé progressivement. Cependant, cette approche présente l'inconvénient de demander une mémoire plus importante lorsque le bouclage n'est pas réalisé. En revanche, la technique a pour avantage de présenter un délai minimal si la parole venant de l'arrivée est vide.

### 7.4 Gestion des transferts intercellulaires

En cours de communication, l'appelant ou le destinataire peuvent être amenés à se déplacer, et ainsi à modifier les conditions de l'appel, et plus précisément à changer de cellule. On parle de transfert intercellulaire (« handover » en anglais). Les situations étudiées sont les suivantes :
- les deux utilisateurs sont en communication dans la zone de bouclage, le bouclage est actif, puis l'un des deux utilisateurs sort de la zone de bouclage (« handover » sortant);
- deux utilisateurs sont en communication dans la zone de bouclage, puis l'un des deux utilisateurs change de cellule, tout en restant dans la zone de bouclage (« handover » interne).

### 7.4.1 Handover interne

On rappelle que l'invention propose un bouclage local non seulement lorsque deux utilisateurs sont localisés dans une même cellule, mais aussi dans le cas où ils sont dans deux cellules différentes et voisines.

L'objectif ici est alors de détecter le changement de cellule d'un des utilisateurs, en cours de communication, alors que le bouclage local est actif, et de maintenir ce bouclage si la nouvelle cellule détectée appartient toujours à la zone de bouclage. Pour cela, l'analyse des voies de signalisation est une fois de plus mise en oeuvre. Le dispositif de l'invention détecte la présence du message HANDOVER COMMAND au sein des échanges de signalisation relatifs aux communications bouclées. Les informations de ce message permettent de connaître la nouvelle cellule et le nouveau circuit. Cependant, le dispositif de l'invention doit pour cela connaître la configuration des différentes cellules, et est donc configuré comme tel. Une maintenance des caractéristiques du réseau cellulaire est donc réalisée, en fonction des modifications apportées par l'exploitant.

L'invention analyse donc le contenu du message HANDOVER COMMAND dès sa détection pour vérifier si la cellule destinatrice est dans la zone de bouclage. Si tel est le cas, l'invention effectue une étape de recherche d'un nouveau canal et active le bouclage via ce nouveau canal trouvé.

Parallèlement, une maintenance locale est exécutée sur l'équipement, concernant les données techniques permettant d'analyser les messages, telles que notamment les données de configuration des cellules, les données nécessaires au décodage de certains champs des voies de signalisation, le décodage contextuel...

### 7.4.2 Handover sortant

Dans cette configuration, la détection du handover est basée sur le même principe que pour le handover interne, c'est-à-dire sur la recherche et l'analyse du message HANDOVER COMMAND au sein des échanges de signalisation relatifs aux communications bouclées. Cependant, au lieu de chercher un nouveau canal, le but final ici est de désactiver le bouclage local pour repasser en transmission classique de la parole par le MSC du réseau cellulaire.

Si l'utilisateur B est l'utilisateur sortant de la zone de bouclage, et l'utilisateur A est celui restant dans la zone de bouclage. Alors lorsque le message HANDOVER COMMAND de l'utilisateur B est détecté, le dispositif de l'invention commence à envoyer la parole sortante venant de l'utilisateur A vers le MSC du réseau. Ceci se traduit par l'introduction d'un silence, vu de A. De plus, le dispositif envoie à A le flux de parole en provenance du MSC, ce qui se traduira aussi par l'introduction d'un silence.

### 7.5 L'exigence légale de l'écoute

Le bouclage local selon l'invention fait que le MSC ne reçoit pas le flux de parole. Dans certains pays ou réseaux la possibilité d'écoute légale est obligatoire, et la parole doit passer par le MSC pour que l'écoute légale telle que spécifiée dans le standard soit possible.

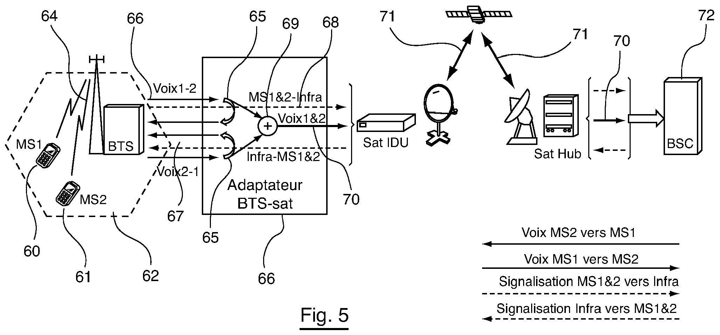

Pour pallier à ce problème, l'invention propose alors de remonter le flux de parole jusqu'au MSC, en relation avec la figure 5. Une telle technique restreint le gain obtenu par le bouclage local, mais ne l'annule pas.

En effet, on rappelle que sans bouclage, chaque sens de la parole passe deux fois par la liaison satellite.

La technique de l'invention est basée sur le fait que la redescente de la parole peut être supprimée sans restreindre la possibilité d'écoute légale.

Plus précisément, deux utilisateurs de stations mobiles 60 et 61 sont en communication et sont localisés dans une même cellule 62 couverte par la même BTS 63. Ils sont donc dans la zone de bouclage et un bouclage 65 est effectué sur les deux flux de parole 66 et 67 en amont de la BTS 63. En effet, le dispositif 66 de l'invention a détecté dans les voies de signalisation 67 et 68 des informations indiquant le caractère local de l'appel.

De façon à répondre aux exigences d'écoute légale, l'adaptateur 66 combine 69 les deux flux de parole 66 et 67 pour les faire remonter jusqu'au MSC dans un signal 70 via la liaison radio par satellite 71 et le BSC 72.

Il est aussi possible de remonter les deux flux indépendamment l'un de l'autre. La combinaison permet alors de gagner un canal.

Une telle combinaison peut être réalisée de plusieurs façons, et il est nécessaire de tester chaque approche pour évaluer les meilleures performances.

Dans un premier cas de figure, les flux sont transcodés, additionnés puis transcodés à nouveau : cette approche est coûteuse. Dans un second cas de figure, une sélection est faite trame par trame, en choisissant l'un des deux flux de parole. Ceci entraîne une perte de la parole quand les deux interlocuteurs parlent en même temps. Enfin, il est possible de transmettre les deux flux en les mettant en séquence. Cette technique assure qu'aucune parole ne soit perdue et est équivalente à l'utilisation d'un bon algorithme d'allocation dans le cas où les deux flux de parole sont transmis indépendamment l'un de l'autre.

## Revendications

1. Procédé de transmission de données dans un réseau cellulaire de radiocommunications mobiles,
procédé du type consistant à établir, maintenir et terminer un canal de communication de données entre un appelant et un appelé situés dans ledit réseau cellulaire,
un appelant et/ou un appelé étant chacun situé dans une zone locale (406) dudit réseau cellulaire,
l'établissement, le maintien et la terminaison dudit canal de communication de données mettant en oeuvre des échanges de messages de signalisation,
ledit procédé comprenant:
- une première phase de détection si l'appelant et l'appelé de ladite communication se situent dans une même zone locale (406) dudit réseau cellulaire, selon une stratégie de détection incluant une étape d'analyse de tout ou partie desdits messages de signalisation;
- une deuxième phase de déclenchement d'une opération de bouclage (421) local de tout ou partie des données échangées entre l'appelant et l'appelé, dans le cas où ladite phase de détection confirme le caractère local de ladite communication entre l'appelant et l'appelé, ladite étape d'analyse de tout ou partie des messages de signalisation étant mise en oeuvre par un dispositif situé en amont d'au moins une station de base (402) du réseau cellulaire et en aval d'un contrôleur (401) de station de base ; et
- ladite opération de bouclage local étant mise en oeuvre par ledit dispositif situé en amont de ladite au moins une station de base (402) du réseau cellulaire et en aval dudit contrôleur (401) de station de base,
ledit procédé étant **caractérisé en ce que** ladite stratégie de détection inclut :
- une étape d'injection dans une succession desdits messages de signalisation formant des flux de signalisation, d'au moins une information de traçage au niveau de la zone locale dudit appelant et/ou dudit appelé ; et/ou
- une étape préalable de détection de la corrélation temporelle entre l'émission et la réception de messages de signalisation prédéterminés.

2. Procédé de transmission selon la revendication 1, **caractérisé en ce que** ladite zone locale est définie par la zone de couverture en aval de ladite station de base (402), ou d'un ensemble desdites stations de base.

3. Procédé de transmission selon l'une quelconque des revendications 1 et 2, ladite station de base étant contrôlée par ledit contrôleur (401) de stations de base parmi une pluralité de contrôleurs de stations de base et la ou lesdites stations de base étant connectées avec le ou lesdits contrôleurs de stations de base via un réseau de connexion, **caractérisé en ce que** ledit bouclage local consiste à acheminer tout ou partie des données échangées entre l'appelant et l'appelé sans transit par le ou lesdits contrôleurs (401) de stations de base.

4. Procédé de transmission selon l'une quelconque des revendications 1 à 3, **caractérisé en ce que** ladite stratégie de détection inclut une étape de reconnaissance de ladite information de traçage dans la zone locale de l'autre desdits interlocuteurs.

5. Procédé de transmission selon la revendication 4 **caractérisé en ce que** ladite information de traçage est constituée par au moins une information représentative de ladite zone locale, et/ou un marqueur spécifique à l'appel au sein des appels en cours dans ladite zone locale.

6. Procédé de transmission selon l'une quelconque des revendications 4 et 5 **caractérisé en ce que** lesdits messages de signalisation sont conformes au standard GSM et **en ce que** ladite information de traçage est encodée dans le champ User-User du message CONNECT ou du message SETUP.

7. Procédé de transmission selon la revendication 1 **caractérisé en ce que** lesdits messages de signalisation prédéterminés appartiennent au groupe comprenant :
- les messages de SETUP départ et PAGING ;
- les messages de CONNECT arrivée et CONNECT départ.

8. Procédé de transmission selon l'une quelconque des revendications 1 et 7 **caractérisé en ce que** ladite stratégie de détection s'effectue en deux temps :
- mise en oeuvre dans un premier temps de ladite étape de détection de la corrélation temporelle entre l'émission et la réception de messages de signalisation prédéterminés ;
- mise en oeuvre dans un second temps de l'étape d'injection de ladite information de traçage si et seulement si une corrélation temporelle a été détectée.

9. Procédé de transmission selon l'une quelconque des revendications 1 à 8, la voie de trafic de la communication acheminant des données à contraintes de temps réel, tel qu'un flux de parole,
**caractérisé en ce que** ladite stratégie de détection inclut une phase d'analyse directe desdites données à contrainte de temps réel.

10. Procédé de transmission selon la revendication 9, lesdites données incluant un flux de parole, **caractérisé en ce que** ladite phase d'analyse du flux de parole comprend une étape supplémentaire d'injection dans ledit flux de parole d'un signal de type DTMF au niveau de la zone locale de l'un desdits interlocuteurs appelant ou appelé et à reconnaître ladite information de traçage dans la zone locale de l'autre desdits interlocuteurs.

11. Procédé de transmission selon l'une quelconque des revendications 9 et 10 lesdites données incluant un flux de parole, et ledit réseau cellulaire étant conforme au standard GSM, **caractérisé en ce que** ladite étape d'analyse du flux de parole est mise en oeuvre après que le mode TFO a été activé.

12. Procédé de transmission selon la revendication 11, le mode TFO étant activé, **caractérisé en ce que** ladite étape d'analyse directe comprend une phase d'injection d'au moins une information spécifique dans le flux de parole pour accélérer la détection de l'identité entre les deux flux par rapport à la simple comparaison de la parole.

13. Procédé de transmission selon la revendication 3 ou l'une quelconque des revendications 4 à 12 en ce qu'elles sont dépendantes de la revendication 3,
ledit réseau de connexion incluant au moins une liaison de type radio à ressources partagées (415) entre la ou lesdites stations de base (402) et le ou lesdits contrôleurs (401) de stations de base,
**caractérisé en ce que** ladite zone locale est définie par la zone située en aval d'un point de connexion à ladite liaison de type radio à ressources partagées.

14. Procédé de transmission selon l'une quelconque des revendications 1 à 13, **caractérisé en ce que** ladite deuxième phase de déclenchement d'une opération de bouclage comprend une phase préliminaire de stockage dans une mémoire tampon des données issues dudit destinataire, de façon à assurer une continuité dans le flux desdites données à transmettre.

15. Procédé de transmission selon l'une quelconque des revendications 1 à 14, **caractérisé en ce qu'**il comprend les étapes supplémentaires de :
- recherche, détection et analyse dans lesdits messages de signalisation d'informations indicatives d'un déplacement dudit appelé et/ou dudit destinataire, en cours de communication.
- adaptation des canaux de communication selon le résultat de ladite étape de recherche, détection et analyse.

16. Procédé de transmission selon la revendication 15, **caractérisé en ce que** ladite information indicative d'un déplacement est constituée par un message de signalisation indicatif des caractéristiques d'une nouvelle cellule dudit réseau cellulaire entre ledit appelé et/ou ledit appelé en déplacement.

17. Procédé de transmission selon la revendication 16, **caractérisé en ce que** lesdits messages de signalisation sont conformes au standard GSM, et **en ce que** ledit message est le message HANDOVER_COMMAND.

18. Procédé de transmission selon l'une quelconque des revendications 15 à 17, **caractérisé en ce que** ladite étape d'adaptation comprend les phases de:
- adaptation du bouclage si le résultat de l'analyse de ladite information indicative d'un déplacement indique que ledit appelant et/ou ledit appelé change de cellule tout en restant dans ladite zone de bouclage ;
- arrêt de ladite opération de bouclage si le résultat de l'analyse de ladite information indicative d'un déplacement indique que ledit appelant et/ou ledit appelé sort de ladite zone de bouclage.

19. Procédé de transmission selon l'une quelconque des revendications 1 à 18, **caractérisé en ce que** tout ou partie desdites données échangées entre ledit appelé et ledit appelant, localisés dans ladite zone de bouclage, est transmis d'une part directement à l'autre interlocuteur par bouclage et d'autre part à au moins un desdits contrôleurs de stations de base.

20. Procédé selon l'une quelconque des revendications 1 à 19, **caractérisé en ce que** ladite première phase de détection est mise en oeuvre dans un premier dispositif (620, 820) situé dans une partie centrale (600 ; 800) du réseau, et **en ce que** ladite deuxième phase de déclenchement d'une opération de bouclage (421) local est mise en oeuvre dans un second dispositif (610 ; 810) situé ladite zone locale (406) dudit réseau cellulaire sous commande (640 ; 840) dudit premier dispositif (620 ; 820).

21. Réseau cellulaire, de radiocommunications mobiles, comprenant des moyens d'établissement, de maintien et de terminaison d'un canal de communication de données entre un appelant et un appelé situés dans ledit réseau cellulaire, un appelant et/ou un appelé étant chacun situé dans une zone locale (406) dudit réseau cellulaire, lesdits moyens d'établissement, de maintien et de terminaison dudit canal de communication de données mettant en oeuvre des échanges de messages de signalisation,
ledit réseau cellulaire comprenant :
- des moyens de détection si l'appelant et l'appelé de ladite communication se situent dans une même zone locale (406) dudit réseau cellulaire, selon une stratégie de détection mettant en oeuvre des moyens d'analyse de tout ou partie desdits messages de signalisation;
- des moyens de déclenchement d'une opération de bouclage (421) local de tout ou partie des données échangées entre l'appelant et l'appelé, dans le cas où lesdits moyens de détection confirme le caractère local de ladite communication entre l'appelant et l'appelé, lesdits moyens d'analyse de tout ou partie des messages de signalisation étant mis en oeuvre par un dispositif situé en amont d'au moins une station de base (402) du réseau cellulaire et en aval d'un contrôleur (401) de station de base ; et
- lesdits moyens de bouclage local étant mis en oeuvre par ledit dispositif situé en amont de ladite au moins une station de base (402) du réseau cellulaire et en aval dudit contrôleur (401) de station de base,
ledit réseau cellulaire étant **caractérisé en ce qu'**il comprend
- des moyens d'injection dans une succession desdits messages de signalisation formant des flux de signalisation d'au moins une information de traçage au niveau de la zone locale dudit appelant et/ou dudit appelé ; et/ou
- des moyens de détection de la corrélation temporelle entre l'émission et la réception de messages de signalisation prédéterminés.

22. Réseau cellulaire selon la revendication 21, **caractérisé en ce que** chaque station de base, nommée BTS, ou chaque ensemble de BTS relié à un même équipement de transmission vers des contrôleurs de stations de base, nommé BSC, est équipée d'un équipement local adaptateur (420 ; 720) comprenant :
- des moyens de détection d'un besoin de bouclage ;
- des moyens de réalisation de l'opération de bouclage ;
- des moyens de détection d'un besoin de débouclage ;
- des moyens de réalisation de l'opération de débouclage,

23. Réseau cellulaire selon la revendication 21, comprenant en outre :
- d'une part, chaque zone locale constituée d'une station de base, nommée BTS, ou d'un ensemble de BTS reliés à un même équipement de transmission vers des contrôleur de stations de base, nommé BSC, est équipée d'un dispositif local adaptateur (610 ; 810); et
- d'autre part, le réseau comprend un dispositif central optimiseur (620 ;820),
ledit réseau cellulaire étant **caractérisé en ce que** :
- ledit dispositif central optimiseur (620 ; 820) possède des moyens de détection d'un besoin de bouclage et/ou de débouclage dans une desdites zones locales;
- le dispositif central optimiseur (620 ; 820) comprend des moyens d'émission d'une commande (640 ; 840) de bouclage et/ou de débouclage à un dispositif local adaptateur (610; 810) situé dans une zone locale dans laquelle il a détecté ledit besoin de bouclage et/ou de débouclage;
- ledit dispositif local adaptateur (610 ; 810) possède des moyens de réalisation de l'opération de bouclage ou de débouclage sous contrôle de la commande de bouclage ou de débouclage respectivement.

24. Réseau cellulaire selon l'une quelconque des revendications 22 et 23, du type comprenant au moins une station de base (402) contrôlée par un contrôleur (401) de stations de base, nommé BSC, et une infrastructure de réseau avec lequel ledit BSC est en connexion,
ladite infrastructure de réseau incluant au moins une liaison (415) de type radio à ressources partagées pour relier le ou lesdites stations de base à leur BSC de contrôle.

25. Réseau cellulaire selon l'une quelconque des revendications 21 et 22, du type comprenant au moins une station de base (402) contrôlée par un contrôleur (401) de stations de base, nommé BSC, et une infrastructure de réseau avec lequel ledit BSC est en connexion,
ladite infrastructure de réseau incluant au moins une liaison (730 ; 830) de type IP pour relier le ou lesdites stations de base à leur BSC de contrôle.

26. Equipement local détecteur (420 ; 620 ; 720 ; 820) d'un réseau cellulaire, de radiocommunications mobiles, comprenant des moyens d'établissement, de maintien et de terminaison d'un canal de communication de données entre un appelant et un appelé situés dans ledit réseau cellulaire, un appelant et/ou un appelé étant chacun situé dans une zone locale (406) dudit réseau cellulaire, lesdits moyens d'établissement, de maintien et de terminaison dudit canal de communication de données mettant en oeuvre des échanges de messages de signalisation, ledit équipement local détecteur comprenant des moyens de détection si l'appelant et l'appelé de ladite communication se situent dans une même zone locale (406) dudit réseau cellulaire, selon une stratégie de détection mettant en oeuvre des moyens d'analyse de tout ou partie desdits messages de signalisation,
ledit équipement local détecteur étant situé en amont d'au moins une station de base (402) du réseau cellulaire et en aval d'un contrôleur (401) de station de base,
ledit équipement local détecteur étant **caractérisé en ce qu'**il comprend :
- des moyens d'injection dans une succession desdits messages de signalisation formant des flux de signalisation d'au moins une information de traçage au niveau de la zone locale dudit appelant et/ou dudit appelé ; et/ou
- des moyens de détection de la corrélation temporelle entre l'émission et la réception de messages de signalisation prédéterminés.

27. Équipement local adaptateur (420 ; 610 ; 720 ; 810) d'un réseau cellulaire, de radiocommunications mobiles, comprenant des moyens d'établissement, de maintien et de terminaison d'un canal de communication de données entre un appelant et un appelé situés dans ledit réseau cellulaire, un appelant et/ou un appelé étant chacun situé dans une zone locale (406) dudit réseau cellulaire, lesdits moyens d'établissement, de maintien et de terminaison dudit canal de communication de données mettant en oeuvre des échanges de messages de signalisation,
ledit équipement local adaptateur comprenant des moyens de déclenchement d'une opération de bouclage (421) local de tout ou partie des données échangées entre l'appelant et l'appelé, dans le cas où lesdits moyens de détection confirme le caractère local de ladite communication entre l'appelant et l'appelé signalisation, ledit équipement local adaptateur local étant situé en amont d'au moins une station de base (402) du réseau cellulaire et en aval d'un contrôleur (401) de station de base,
ledit équipement local adaptateur étant **caractérisé en ce qu'**il comprend un équipement local détecteur selon la revendication 26.

## Patentansprüche

1. Verfahren zur Datenübertragung in einem zellularen Mobilfunkkommunikationsnetz,
bei dem ein Datenkommunikationskanal zwischen einem Anrufer und einem Angerufenen, die sich in dem zellularen Netz befinden, aufgebaut, aufrechterhalten und abgebaut wird,
wobei ein Anrufer und/oder ein Angerufener sich jeweils in einem lokalen Bereich (406) des zellularen Netzes befinden,
wobei für das Aufbauen, Aufrechterhalten und Abbauen des Datenkommunikationskanals ein Austausch von Signalisierungsnachrichten erfolgt,
wobei das Verfahren umfasst:
- eine erste Detektionsphase, um gemäß einer Detektionsstrategie, die einen Schritt der Analyse eines Teils der oder aller Signalisierungsnachrichten umfasst, zu ermitteln, ob der Kommunikationsanrufer und der Kommunikationsangerufene sich in ein und demselben lokalen Bereich (406) des zellularen Netzes befinden,
- eine zweite Phase des Auslösens eines lokalen Loopbacks (421) eines Teils der oder aller Daten, die zwischen dem Anrufer und dem Angerufenen ausgetauscht werden, wenn die Detektionsphase den lokalen Charakter der Kommunikation zwischen dem Anrufer und dem Angerufenen bestätigt, wobei der Schritt der Analyse eines Teils der oder aller Signalisierungsnachrichten durch eine Vorrichtung durchgeführt wird, die vor mindestens einer Basisstation (402) des zellularen Netzes und nach einem Basisstationscontroller (401) angeordnet ist, und
- das lokale Loopback durch die Vorrichtung ausgeführt wird, die vor der mindestens einen Basisstation (402) des zellularen Netzes und nach dem Basisstationscontroller (401) angeordnet ist,
wobei das Verfahren **dadurch gekennzeichnet ist, dass** die Detektionsstrategie umfasst:
- einen Schritt des Einspeisens mindestens einer Verfolgungsinformation an dem lokalen Bereich des Anrufers und/oder des Angerufenen in eine Abfolge der Signalisierungsnachrichten, die Signalisierungsströme bilden und/oder
- einen vorangehenden Schritt der Detektion der zeitlichen Korrelation zwischen dem Senden und dem Empfangen von vorbestimmten Signalisierungsnachrichten.

2. Übertragungsverfahren nach Anspruch 1, **dadurch gekennzeichnet, dass** der lokale Bereich durch den Abdeckungsbereich nach der Basisstation (402) oder einer Gruppe der Basisstationen definiert ist.

3. Übertragungsverfahren nach einem beliebigen der Ansprüche 1 und 2, wobei die Basisstation durch den Basisstationencontroller (401) unter einer Vielzahl von Basisstationencontroller kontrolliert wird, und die Basisstation oder die Basisstationen mit dem oder den Basisstationencontroller über ein Verbindungsnetz verbunden sind, **dadurch gekennzeichnet, dass** das lokale Loopback darin besteht, einen Teil der oder alle zwischen dem Anrufer und dem Angerufenen ausgetauschten Daten an dem oder den Basisstationencontrollern (401) vorbei zu leiten.

4. Übertragungsverfahren nach einem beliebigen der Ansprüche 1 bis 3, **dadurch gekennzeichnet, dass** die Detektionsstrategie einen Schritt der Erkennung der Verfolgungsinformation in dem lokalen Bereich des jeweils anderen Gesprächspartners beinhaltet.

5. Übertragungsverfahren nach Anspruch 4, **dadurch gekennzeichnet, dass** die Verfolgungsinformation durch mindestens eine für den lokalen Bereich repräsentative Information und/oder einen für den Anruf unter den in dem lokalen Bereich aktuellen Anrufe spezifischen Marker gebildet ist.

6. Übertragungsverfahren nach einem beliebigen der Ansprüche 4 und 5, **dadurch gekennzeichnet, dass** die Signalisierungsnachrichten dem GSM-Standard entsprechen und dass die Verfolgungsinformation in dem User-User-Feld der CONNECT-Nachricht oder der SETUP-Nachricht encodiert ist.

7. Übertragungsverfahren nach Anspruch 1, **dadurch gekennzeichnet, dass** die vorbestimmten Signalisierungsnachrichten zu der Gruppe gehören, die
- die Nachrichten SETUP Start und PAGING,
- die Nachrichten CONNECT Ziel und CONNECT Start enthalten.

8. Übertragungsverfahren nach einem beliebigen der Ansprüche 1 und 7, **dadurch gekennzeichnet, dass** die Detektionsstrategie in zwei Etappen erfolgt:
- zuerst Durchführung des Schritts der Detektion der zeitlichen Korrelation zwischen dem Senden und dem Empfangen von vorbestimmten Signalisierungsnachrichten;
- dann Durchführung des Schritts des Einspeisens der Verfolgungsinformation ausschließlich dann, wenn eine zeitliche Korrelation detektiert wurde.

9. Übertragungsverfahren nach einem beliebigen der Ansprüche 1 bis 8, wobei der Verkehrskanal für die Kommunikation Daten mit Echtzeitvorgaben wie einen Redefluss leitet, **dadurch gekennzeichnet, dass** die Detektionsstrategie eine Phase der direkten Analyse der Daten mit Echtzeitvorgaben umfasst.

10. Übertragungsverfahren nach Anspruch 9, wobei die Daten einen Redefluss umfassen, **dadurch gekennzeichnet, dass** die Phase der Analyse des Redeflusses einen zusätzlichen Schritt des Einspeisens eines DTMF-Signals an dem lokalen Bereich eines der anrufenden oder angerufenen Gesprächspartner sowie das Erkennen der Verfolgungsinformation in dem lokalen Bereich des jeweils anderen Gesprächspartners umfasst.

11. Übertragungsverfahren nach einem beliebigen der Ansprüche 9 und 10, wobei die Daten einen Redefluss umfassen und das zellulare Netz dem GSM-Standard entspricht, **dadurch gekennzeichnet, dass** der Schritt der Analyse des Redeflusses durchgeführt wird, nachdem der TFO-Modus aktiviert wurde.

12. Übertragungsverfahren nach Anspruch 11, wobei der TFO-Modus aktiviert ist, **dadurch gekennzeichnet, dass** der Schritt der direkten Analyse eine Phase des Einspeisens mindestens einer spezifischen Information in den Redefluss umfasst, um die Detektion der Übereinstimmung der zwei Flüsse in Bezug auf den einfachen Vergleich des Sprechens zu beschleunigen.

13. Übertragungsverfahren nach Anspruch 3 oder nach einem beliebigen der Ansprüche 4 bis 12, sofern abhängig von Anspruch 3, wobei das Verbindungsnetz mindestens eine Verbindung von der Art einer Funkverbindung mit geteilten Ressourcen (415) zwischen der Basisstation oder den Basisstationen (402) und dem Basisstationencontroller oder den Basisstationencontrollern (401) umfasst, **dadurch gekennzeichnet, dass** der lokale Bereich durch den Bereich nach einem Verbindungspunkt mit der Verbindung von der Art Funkverbindung mit geteilten Ressourcen definiert ist.

14. Übertragungsverfahren nach einem beliebigen der Ansprüche 1 bis 13, **dadurch gekennzeichnet, dass** die zweite Phase des Auslösens eines Loopbacks eine vorherige Phase des Speicherns der Daten von dem Empfänger in einem Pufferspeicher umfasst, um einen ununterbrochenen Fluss der zu übermittelnden Daten sicherzustellen.

15. Übertragungsverfahren nach einem beliebigen der Ansprüche 1 bis 14, **dadurch gekennzeichnet, dass** es die folgenden zusätzlichen Schritte umfasst:
- Suche nach, Detektion und Analyse in den Signalisierungsnachrichten von Informationen, die auf eine Bewegung des Angerufenen und/oder des Empfängers während der Kommunikation hinweisen,
- Anpassung der Kommunikationskanäle gemäß dem Ergebnis des Schritts der Suche, Detektion und Analyse.

16. Übertragungsverfahren nach Anspruch 15, **dadurch gekennzeichnet, dass** die auf eine Bewegung hinweisende Information durch eine Signalisierungsnachricht gebildet ist, die auf die Merkmale einer neuen Zelle des zellularen Netzes zwischen dem Angerufenen und/oder dem sich bewegenden Angerufenen hinweist.

17. Übertragungsverfahren nach Anspruch 16, **dadurch gekennzeichnet, dass** die Signalisierungsnachrichten dem GSM-Standard entsprechen und dass es sich bei der Nachricht um die HANDOVER_COMMAND-Nachricht handelt.

18. Übertragungsverfahren nach einem beliebigen der Ansprüche 15 bis 17, **dadurch gekennzeichnet, dass** der Schritt der Anpassung folgende Phasen umfasst:
- Anpassung des Loopbacks, wenn das Ergebnis der Analyse der auf eine Bewegung hinweisenden Information anzeigt, dass der Anrufer und/oder der Angerufene die Zelle wechseln und dabei in dem Loopbackbereich bleiben,
- Unterbrechung des Loopbacks, wenn das Ergebnis der Analyse der auf eine Bewegung hinweisenden Information anzeigt, dass der Anrufer und/oder der Angerufene den Loopbackbereich verlassen.

19. Übertragungsverfahren nach einem beliebigen der Ansprüche 1 bis 18, **dadurch gekennzeichnet, dass** ein Teil der oder alle Daten, die zwischen dem Angerufenen und dem Anrufer ausgetauscht werden, die sich in dem Loopbackbereich befinden, einerseits direkt an den jeweils anderen Gesprächspartner per Loopback und andererseits an mindestens einen der Basisstationencontroller übertragen werden.

20. Verfahren nach einem beliebigen der Ansprüche 1 bis 19, **dadurch gekennzeichnet, dass** die erste Phase der Detektion in einer ersten Vorrichtung (620, 820) durchgeführt wird, die sich in einem zentralen Bereich (600; 800) des Netzes befindet, und dass die zweite Phase des Auslösens eines lokalen Loopbacks (421) in einer zweiten Vorrichtung (610; 810) durchgeführt wird, die sich in dem lokalen Bereich (406) des zellularen Netzes gesteuert (640; 840) durch die erste Vorrichtung (620; 820) befindet.

21. Zellulares Mobilfunknetz mit
Mitteln für das Aufbauen, das Aufrechterhalten und das Abbauen eines Datenkommunikationskanals zwischen einem Anrufer und einem Angerufenen, die sich in dem zellularen Netz befinden, wobei ein Anrufer und/oder ein Angerufener sich jeweils in einem lokalen Bereich (406) des zellularen Netzes befinden, wobei die Mittel für das Aufbauen, das Aufrechterhalten und das Abbauen des Datenkommunikationskanals einen Austausch von Signalisierungsnachrichten durchführen, wobei das zellulare Netz Folgendes aufweist:
- Mittel, um gemäß einer Detektionsstrategie, die Mittel für die Analyse eines Teils der oder aller Signalisierungsnachrichten einsetzt, zu ermitteln, ob der Kommunikationsanrufer und der Kommunikationsangerufene sich in ein und demselben lokalen Bereich (406) des zellularen Netzes befinden,
- Mittel für das Auslösen eines lokalen Loopbacks (421) eines Teils der oder aller Daten, die zwischen dem Anrufer und dem Angerufenen ausgetauscht werden, wenn die Detektionsmittel den lokalen Charakter der Kommunikation zwischen dem Anrufer und dem Angerufenen bestätigen, wobei die Mittel für die Analyse eines Teils der oder aller Signalisierungsnachrichten durch eine Vorrichtung eingesetzt werden, die vor mindestens einer Basisstation (402) des zellularen Netzes und nach einem Basisstationscontroller (401) angeordnet ist, und
- wobei die Mittel für das lokale Loopback durch die Vorrichtung eingesetzt werden, die vor der mindestens einen Basisstation (402) des zellularen Netzes und nach dem Basisstationscontroller (401) angeordnet ist,
wobei das zellulare Netz **dadurch gekennzeichnet ist, dass** es aufweist:
- Mittel für das Einspeisen mindestens einer Verfolgungsinformation an dem lokalen Bereich des Anrufers und/oder des Angerufenen in eine Abfolge von Signalisierungsnachrichten, die Signalisierungsströme bilden und/oder
- Mittel für die Detektion der zeitlichen Korrelation zwischen dem Senden und dem Empfangen von vorbestimmten Signalisierungsnachrichten.

22. Zellulares Netz nach Anspruch 21, **dadurch gekennzeichnet, dass** jede als BTS bezeichnete Basisstation oder jede Gruppe von BTS, die mit ein und derselben Einrichtung für die Übertragung zu als BSC bezeichneten Basisstationencontrollern mit einer lokalen Anpassungseinrichtung (420; 720) ausgerüstet ist, umfassend:
- Mittel für die Ermittlung eines Loopback-Bedarfs,
- Mittel für die Durchführung des Loopbacks,
- Mittel für die Ermittlung eines Bedarfs für eine Loopback-Auflösung,
- Mittel für die Durchführung der Loopback-Auflösung.

23. Zellulares Netz nach Anspruch 21, wobei ferner:
- einerseits jeder lokale Bereich bestehend aus einer als BTS bezeichneten Basisstation oder aus einer Gruppe von BTS, verbunden mit ein und derselben Einrichtung für die Übertragung zu als BSC bezeichneten Basisstationencontrollern, mit einer lokalen Anpassungseinrichtung (610; 810) ausgerüstet ist, und
- andererseits das Netz eine zentrale Optimierungsvorrichtung (620; 820) aufweist,
wobei das zellulare Netz **dadurch gekennzeichnet ist, dass**
- die zentrale Optimierungsvorrichtung (620; 820) Mittel für die Ermittlung eines Bedarfs für einen Loopback- und/oder eine Loopback-Auflösung in einem der lokalen Bereiche aufweist,
- die zentrale Optimierungsvorrichtung (620; 820) Mittel für das Aussenden eines Loopback- und/oder Loopback-Auflösungs-Befehls (640; 840) an eine lokale Anpassungsvorrichtung (610; 810), die sich in einem lokalen Bereich befindet, in dem der Bedarf für einen Loopback- und/oder eine Loopback-Auflösung ermittelt wurde,
- die lokale Anpassungsvorrichtung (610; 810) Mittel für die Durchführung des Loopbacks oder der Loopback-Auflösung gesteuert durch den Loopback- bzw. den Loopback-Auflösungs-Befehl aufweist.

24. Zellulares Netz nach einem beliebigen der Ansprüche 22 und 23, von der Art mit mindestens einer Basisstation (402), die von einem als BSC bezeichneten Basisstationencontroller (401) kontrolliert wird, und einer Netzinfrastruktur, mit dem der BSC verbunden ist, wobei die Netzinfrastruktur mindestens eine Verbindung (415) von der Art einer Funkverbindung mit geteilten Ressourcen umfasst, um die Basisstation bzw. die Basisstationen mit ihrem Kontroll-BSC zu verbinden.

25. Zellulares Netz nach einem beliebigen der Ansprüche 21 und 22, von der Art mit mindestens einer Basisstation (402), die von einem als BSC bezeichneten Basisstationencontroller (401) kontrolliert wird, und einer Netzinfrastruktur, mit dem der BSC verbunden ist, wobei die Netzinfrastruktur mindestens eine Verbindung (730; 830) von der Art IP umfasst, um die Basisstation bzw. die Basisstationen mit ihrem Kontroll-BSC zu verbinden.

26. Lokale Detektionseinrichtung (420; 620; 720; 820) eines zellularen Mobilfunkkommunikationsnetzes, umfassend Mittel für das Aufbauen, das Aufrechterhalten und das Abbauen eines Datenkommunikationskanals zwischen einem Anrufer und einem Angerufenen, die sich in dem zellularen Netz befinden, wobei ein Anrufer und/oder ein Angerufener sich jeweils in einem lokalen Bereich (406) des zellularen Netzes befinden, wobei die Mittel für das Aufbauen, das Aufrechterhalten und das Abbauen des Datenkommunikationskanals einen Austausch von Signalisierungsnachrichten durchführen, wobei die lokale Detektionseinrichtung Mittel aufweist, um gemäß einer Detektionsstrategie, die Mittel für die Analyse eines Teils der oder aller Signalisierungsnachrichten einsetzt, zu ermitteln, ob der Kommunikationsanrufer und der Kommunikationsangerufene sich in ein und demselben lokalen Bereich (406) des zellularen Netzes befinden, wobei die lokale Detektionseinrichtung vor mindestens einer Basisstation (402) des zellularen Netzes und nach einem Basisstationscontroller (401) angeordnet ist,
wobei die lokale Detektionseinrichtung **dadurch gekennzeichnet ist, dass** sie umfasst:
- Mittel für das Einspeisen mindestens einer Verfolgungsinformation an dem lokalen Bereich des Anrufers und/oder des Angerufenen in eine Abfolge von Signalisierungsnachrichten, die Signalisierungsströme bildend und/oder
- Mittel für die Detektion der zeitlichen Korrelation zwischen dem Senden und dem Empfangen von vorbestimmten Signalisierungsnachrichten.

27. Lokale Detektionseinrichtung (420; 610; 720; 810) eines zellularen Mobilfunkkommunikationsnetzes, umfassend Mittel für das Aufbauen, das Aufrechterhalten und das Abbauen eines Datenkommunikationskanals zwischen einem Anrufer und einem Angerufenen, die sich in dem zellularen Netz befinden, wobei ein Anrufer und/oder ein Angerufener sich jeweils in einem lokalen Bereich (406) des zellularen Netzes befinden, wobei die Mittel für das Aufbauen, das Aufrechterhalten und das Abbauen des Datenkommunikationskanals einen Austausch von Signalisierungsnachrichten durchführen, wobei die lokale Detektionseinrichtung Mittel für das Auslösen eines lokalen Loopbacks (421) eines Teils der oder aller Daten aufweist, die zwischen dem Anrufer und dem Angerufenen ausgetauscht werden, wenn die Detektionsmittel den lokalen Charakter der Kommunikation zwischen dem Anrufer und dem Angerufenen bestätigen, wobei die lokale Anpassungseinrichtung vor mindestens einer Basisstation (402) des zellularen Netzes und nach einem Basisstationscontroller (401) angeordnet ist, wobei die lokale Anpassungseinrichtung **dadurch gekennzeichnet ist, dass** sie eine lokale Detektionseinrichtung nach Anspruch 26 umfasst.

## Claims

1. Method of transmitting data in a mobile radio communication cellular network,
method of the type consisting in setting up, maintaining and terminating a data communication channel between a caller and a called party located in said cellular network,
a caller and/or a called party each being located in a local zone (406) of said cellular network,
the setting up, the maintaining and the termination of said data communication channel implementing the exchanges of signalling messages,
said method comprising:
- a first detecting phase if the caller and the called party of said communication are located in the same local zone (406) of said cellular network, according to a detection strategy including a step of analysing all or a portion of said signalling messages;
- a second phase of triggering a local loopback operation (421) of all or a portion of the data exchanged between the caller and the called party, in the case where said detecting phase confirms the local nature of said communication between the caller and the called party.
And in that
said step of analysing all or a portion of the signalling messages is implemented by a device located upstream of at least one base station (402) of the cellular network and downstream of a base station controller (401) et
said local loopback operation is implemented by the device located upstream of said at least one base station (402) of the cellular network and downstream of said base station controller (401),
said method being **characterized in that** said detection strategy comprises:
a step for injecting into said signalling flow of at least one piece of tracking data in the local zone of said caller party and/or said called party; and/or
a prior step of detecting the time correlation between the emission and the reception of predetermined signalling messages.

2. Method of transmitting as set forth in claims 1, **characterised in that** said local zone is defined by the coverage area downstream of said base station (402), or of a set of said base stations.

3. Method of transmitting as set forth in any of claims 1 and 2, said base station being controlled by said base station controller (401) among a plurality of base stations controllers and said base station(s) being connected with said base station controller(s) via a connecting network, **characterised in that** said local loopback consists in carrying all or a portion of the data exchanged between the caller and the called party without transiting by said base station controllers (401).

4. Method of transmitting as set forth in any of claims 1 to 3, , **characterised in that** said detection strategy includes of recognising said tracking data in the local zone of the other of said parties.

5. Method of transmitting as set forth in claim 4 **characterised in that** said tracking data is constituted by at least one piece of data representative of said local zone, and/or a marker specific to the call within the calls in progress in said local zone.

6. Method of transmitting as set forth in any of claims 4 and 5 **characterised in that** said signalling messages are compliant with the GSM standard and **in that** said tracking data is encoded in the User-User field of the CONNECT message or of the SETUP message.

7. Method of transmitting as set forth in claim 1 **characterised in that** said predetermined signalling messages belong to the group comprising:
- the departing SETUP and PAGING messages;
- the arriving CONNECT and departing CONNECT messages.

8. Method of transmitting as set forth in any of claims 1 and 7 **characterised in that** said detection strategy is accomplished in two periods:
- implementation in a first period of time of said step of detecting the time correlation between the transmissions of predetermined signalling messages;
- implementation in a second period of time of the step of injecting said tracking data if and only if a time correlation has been detected.

9. Method of transmitting as set forth in any of claims 1 to 8, the traffic channel of the communication carrying data with a real-time constraint, such as a flow of speech,
**characterised in that** said detection strategy includes a direct analysing phase of said data with a real-time constraint.

10. Method of transmitting as set forth in claim 9, said data including a flow of speech, **characterised in that** said analysing phase of the speech flow comprises an additional step of injecting into said flow of speech a signal of the DTMF type in the local zone of one of said caller or called parties and of recognising said tracking data in the local zone of the other of said parties.

11. Method of transmitting as set forth in any of claims 9 and 10 said data including a flow of speech, and said cellular network being compliant with the GSM standard, **characterised in that** said step of analysing the flow of speech is implemented after the TFO mode has been activated.

12. Method of transmitting as set forth in claim 11, the TFO mode being activated, **characterised in that** said step of direct analysis comprises a phase of injecting at least one piece of specific information into the flow of speech in order to accelerate the detection of the identity between the two flows in relation to a simple comparison of the speech.

13. Method of transmitting as set forth in claim 3 or any of claims 4 to 12 when depending on claim 3,
said connecting network including at least one link of the radio with shared resources type (415) between said base station(s) (402) and said base station controller (s) (401),
**characterised in that** said local zone is defined by the zone located downstream of a connection point with said link of the radio with shared resources type.

14. Method of transmitting as set forth in any of claims 1 to 13, **characterised in that** said second phase of triggering a loopback operation comprises a preliminary phase of storing in a memory buffer of the data coming from said correspondent, in such a way as to ensure continuity in the flow of said data to be transmitted.

15. Method of transmitting as set forth in any of claims 1 to 14, **characterised in that** it comprises the following additional steps:
- searching for, detecting and analysing in said signalling messages data indicating a displacement of said called party and/or said correspondent, during communication.
- adaptation of the communication channels according to the result of said step of searching, detecting and analysing.

16. Method of transmitting as set forth in claim 15, **characterised in that** said information indicating a displacement is constituted by a signalling message indicating the characteristics of a new cell of said cellular network between said called party and/or said called party in displacement.

17. Method of transmitting as set forth in claim 16 **characterised in that** said signalling messages are compliant with the GSM standard, and **in that** said message if the HANDOVER_COMMAND message.

18. Method of transmitting as set forth in any of claims 15 to 17, **characterised in that** said step of adapting comprises the phases of:
- adapting the loopback if the result of the analysis of said information indicating a displacement indicates that said caller and/or said called party is changing cells while still remaining in said loopback zone;
- stopping the said loopback operation if the result of the analysis of said information indicating a displacement indicates that said caller and/or said called party are leaving the loopback zone.

19. Method of transmitting according to any of claims 1 to 18, **characterised in that** all or a portion of said data exchanged between said called party and said caller, located in said loopback zone, is transmitted on the one hand directly to the other party via loopback and on the other hand to at least one of said base station controllers.

20. Method as set forth in any of claims 1 to 19, **characterised in that** said first detecting phase is implemented in a first device (620, 820) located in a central portion (600; 800) of the network, and **in that** said second phase of triggering a local loopback operation (421) is implemented in a second device (610; 810) located in said local zone (406) of said cellular network under command (640; 840) of said first device (620; 820).

21. Cellular network of mobile radio communication comprising means for setting up, maintaining and terminating a data communication channel between a caller and a called party located in said cellular network, a caller and/or a called party each being located in a local zone (406) of said cellular network, the setting up, the maintaining and the termination of said data communication channel implementing the exchanges of signalling messages,
cellular network comprising:
- means for detecting if the caller and the called party of said communication are located in the same local zone (406) of said cellular network, according to a detection strategy including a step of analysing all or a portion of said signalling messages;
- means for triggering a local loopback operation (421) of all or a portion of the data exchanged between the caller and the called party, in the case where said detecting phase confirms the local nature of said communication between the caller and the called party.
And in that
said means for analysing all or a portion of the signalling messages are implemented by a device located upstream of at least one base station (402) of the cellular network and downstream of a base station controller (401) et
said means for triggering local loopback are implemented by the device located upstream of said at least one base station (402) of the cellular network and downstream of said base station controller (401), said cellular network being **characterized in that** it comprises:
means for injecting into said signalling flow of at least one piece of tracking data in the local zone of said caller party and/or said called party; and/or
means for detecting the time correlation between the emission and the reception of predetermined signalling messages

22. Cellular network as set forth in claim 21, **characterised in that** on the one hand, each local zone constituted of a BTS, or of a set of BTSs connected to the same transmission equipment to the BSCs, is equipped with a local adapter device (610; 810) comprising:
- means for detecting the need for local loopback;
- means for realizing the local loopback operation.
- means for detecting the need for local removal of loopback;
- means for realizing the local removal of loopback operation.

23. Cellular network as set forth in claim 21 additionally comprising
- on one hand, each local zone being constituted of a base station named BTS or a set of BTS linked to a transmission equipment to a base station controller named BSC, equipped with a local adaptor equipment,
- on the other hand, the network comprises a central optimising device (620; 820),
said cellular network being **characterized in that**:
- said central optimising device (620; 820) has means of detecting a need for loopback and/or removal of a loopback in one of said local zones;
- the optimising device (620; 820) comprises means of issuing a command (640; 840) for loopback and/or removing a loopback to a local adapter device (610; 810) located in a local zone wherein it has detected said need for loopback and/or removal of loopback;
- a local adapter devices (610; 810) has the means of carrying out the loopback operation or of removing the loopback under the control of the loopback or loopback removal command respectively;

24. Cellular network as set forth in any of claims 22 and 23, of the type comprising at least one base station (402) controlled by a base station controller (401), called BSC, and a network infrastructure with which said BSC is in connection,
said network infrastructure including at least one link (415) of the radio with shared resources type to connect said base station(s) to their control BSC.

25. Cellular network as set forth in any of claims 21 and 22, of the type comprising at least one base station (402) controlled by a base station controller (401), called BSC, and a network infrastructure with which said BSC is in connection,
said network infrastructure including at least one link (730; 830) of the IP type to connect said base station(s) to their control BSC.

26. Local detector equipment (420; 620; 720; 820) of a mobile radio communication network, comprising means for setting up, maintaining and terminating a data communication channel between a caller and a called party located in said cellular network, a caller and/or a called party each being located in a local zone (406) of said cellular network, the setting up, the maintaining and the termination of said data communication channel implementing the exchanges of signalling messages, said local detector equipment comprising means for detecting if the caller and the called party of said communication are located in the same local zone (406) of said cellular network, according to a detection strategy including a step of analysing all or a portion of said signalling messages and said located upstream of at least one base station (402) of the cellular network and downstream of a base station controller (401), said Local detector equipment being **characterized in that** it comprises:
means for injecting into said signalling flow of at least one piece of tracking data in the local zone of said caller party and/or said called party; and/or
means for detecting the time correlation between the emission and the reception of predetermined signalling messages

27. Local adapter equipment (420; 610; 720; 810) of a mobile radio communication network, comprising means for setting up, maintaining and terminating a data communication channel between a caller and a called party located in said cellular network, a caller and/or a called party each being located in a local zone (406) of said cellular network, the setting up, the maintaining and the termination of said data communication channel implementing the exchanges of signalling messages, said Local adapter equipment comprising means for triggering a local loopback operation (421) of all or a portion of the data exchanged between the caller and the called party, in the case where said detecting phase confirms the local nature of said communication between the caller and the called party and means for triggering local loopback are implemented by the device located upstream of said at least one base station (402) of the cellular network and downstream of said base station controller (401).
said Local adapter equipment being **characterized in that** it comprises a local detector equipment according to claim 26.
